# EUROPEAN PATENT SPECIFICATION

(11) **EP 2 157 643 B1**
(45) Date of publication and mention of the grant of the patent: **08.04.2015**
(21) Application number: 08764053.8
(22) Date of filing: 09.06.2008
(51) Int. Cl.: H01M 4/86, H01M 8/02, H01M 8/04, H01M 8/10, H01M 8/06

(54) **POLYMER ELECTROLYTE FUEL CELL**
POLYMERELEKTROLYT-BRENNSTOFFZELLE
PILE À COMBUSTIBLE À ÉLECTROLYTE POLYMÈRE

(30) Priority: 08.06.2007 JP 2007152316
(43) Date of publication of application: 24.02.2010
(73) Proprietor: Panasonic Corporation, Kadoma-shi Osaka 571-8501 (JP)
(72) Inventor: GEMBA, Miho, Osaka-shi, Osaka 540-6207 (JP); NOGI, Atsushi, Osaka-shi, Osaka 540-6207 (JP); SHINTANI, Haruhiko, Osaka-shi, Osaka 540-6207 (JP); NAKAGAWA, Takashi, Osaka-shi, Osaka 540-6207 (JP); TSUJI, Yoichiro, Osaka-shi, Osaka 540-6207 (JP)
(74) Representative: Leinweber & Zimmermann
(86) International application number: PCT/JP2008/001456
(87) International publication number: WO 2008/152794

(56) References cited:
- WO-A2-01/15255
- JP-A- 07 134 992
- JP-A- 08 167 416
- JP-A- 61 269 857
- JP-A- 2002 367 655
- JP-A- 2006 252 948
- JP-A- 2006 286 330
- JP-A- 2006 286 330
- JP-A- 2007 073 252
- JP-A- 2007 123 235
- JP-A- 2008 034 191
- US-A1- 2004 086 775

## Description

### TECHNICAL FIELD

The present invention relates to a structure of a polymer electrolyte fuel cell. Particularly, the present invention relates to an electrode structure.

### BACKGROUND ART

Polymer electrolyte fuel cells (hereinafter referred to as PEFCs) generate electric power and heat simultaneously by electrochemically reacting a fuel gas containing hydrogen with an oxidizing gas containing oxygen such as air. An electrolyte layer for use in the PEFC is required to be humid to keep sufficient hydrogen ion conductivity. For this reason, generally, a humidified fuel gas and a humidified oxidizing gas are supplied to the PEFC.

In in-vehicle and stationary PEFCs, further cost reduction and compactness are expected for practical use. In light of this, research has been made to smoothly carry out power generation even when a reactant gas humidifier is omitted or a humidification condition is a so-called low-level humidification condition (humidification condition in which the moisture contained in the reactant gas is adjusted so that the reactant gas is allowed to have a dew point lower than an operating temperature of the fuel cell). As a fuel cell meeting such a demand, a solid polymer fuel cell is known, in which a solid polymer membrane can be entirely kept humid even under the low-level humidification condition (e.g., see Patent document 1).

In the solid polymer fuel cell disclosed in Patent document 1, moisture permeability in the vicinity of an inlet of a cathode gas diffusion layer is made lower than moisture permeability in other region of the cathode gas diffusion layer to avoid that moisture is lost from the region of the solid polymer membrane in the vicinity of the oxidizing gas inlet. Thereby, the solid polymer membrane can be entirely kept in a humid state.
Patent document 1: Japanese Laid Open Patent Application Publication No. 2001-6708. JP 2006 286330 A discloses a polymer electrolyte fuel cell with different hydrophilic properties of the components of the cell.

### DISCLOSURE OF THE INVENTION

### PROBLEMS TO BE SOLVED BY THE INVENTION

However, from experiments, the present inventors discovered that even in the solid polymer fuel cell disclosed in Patent document 1, under the low-level humidification condition, poisoning of an anode due to impurities containing as constituents sulfur such as a small amount of SO₂, H₂S or methyl mercaptan, which is contained in an oxidizing gas cannot be prevented sufficiently, leaving a room for improvement.

The present invention has been made in view of the above described problem, and an object of the present invention is to provide a polymer electrolyte fuel cell which is capable of sufficiently reducing poisoning of an anode due to impurities containing as constituents sulfur added to an oxidizing gas even under a low-level humidification condition.

### MEANS FOR SOLVING THE PROBLEM

The present inventors researched intensively to solve the above described problem associated with the prior art. As a result, the inventors discovered the following and conceived the present invention as defined by independent claim 1.

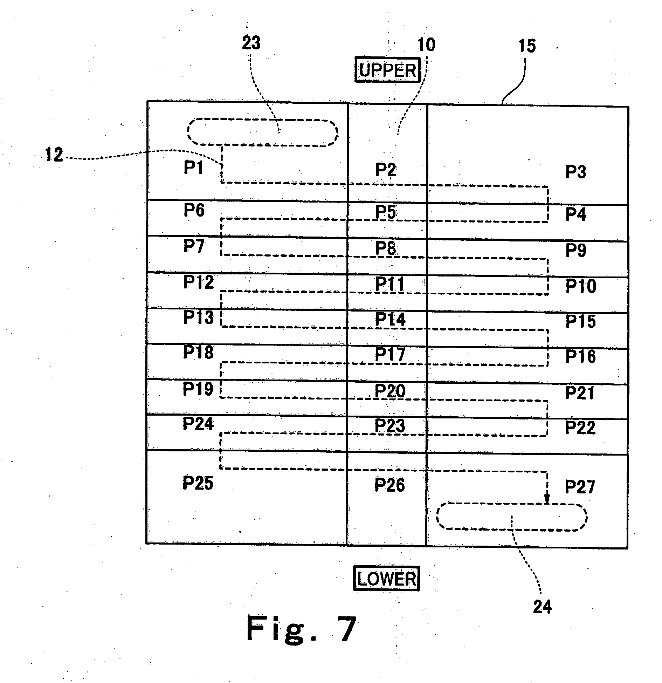

To be specific, as shown in Fig. 7, the inventors fabricated a fuel cell such that a fuel gas channel and an oxidizing gas channel form so-called a parallel flow pattern using a current collector whose main surface is divided into 27 regions along the oxidizing gas channel (mostupstream region of the oxidizing gas channel is a region P1 and a mostdownstream region is a region P27) and conducted an experiment to measure a current (power generation amount) in each of the divided regions (region P1 ~ region P27) in such a manner that SO₂ was added to the oxidizing gas while maintaining the power generation amount constant under the low-level humidification condition.

As a result, the power generation amount decreased in the upstream region (region P1 ~ region P9) of the oxidizing gas channel immediately after SO₂ was added to the oxidizing gas. When SO₂ was further added to the oxidizing gas, the power generation amount drastically reduced in an intermediate region (region P10 - region P21) of the oxidizing gas channel after a lapse of 180 hours, whereas the power generation amount drastically increased in the downstream region (region P22 ~ region P27) after a lapse of 180 hours.

Thereafter, SO₂ was further added to the oxidizing gas for 120 hours. After that, a CV characteristic (electric characteristic) of the anode was measured. As a result, it was found that the regions of the anode which are in contact with the upstream region and the intermediate region of the fuel gas channel (hereinafter referred to as an upstream region of the anode and an intermediate region of the anode) were poisoned by SO₂ even though SO₂ was added to the oxidizing gas.

The inventors presumed that, because of the low-level humidification condition, reverse diffusion occurred in the regions of the cathode which are in contact with the upstream region and the intermediate region of the oxidizing gas channel (hereinafter referred to as an upstream region of the cathode and an intermediate region of the cathode), and SO₂ added to the oxidizing gas moved to the anode together with the water and poisoned the upstream region and the intermediate region of the anode.

In light of the above, the inventors discovered that, under the low-level humidification condition, the above problem can be solved effectively by preventing that the water generated in the upstream region and the intermediate region of the cathode reversely diffuses to the anode.

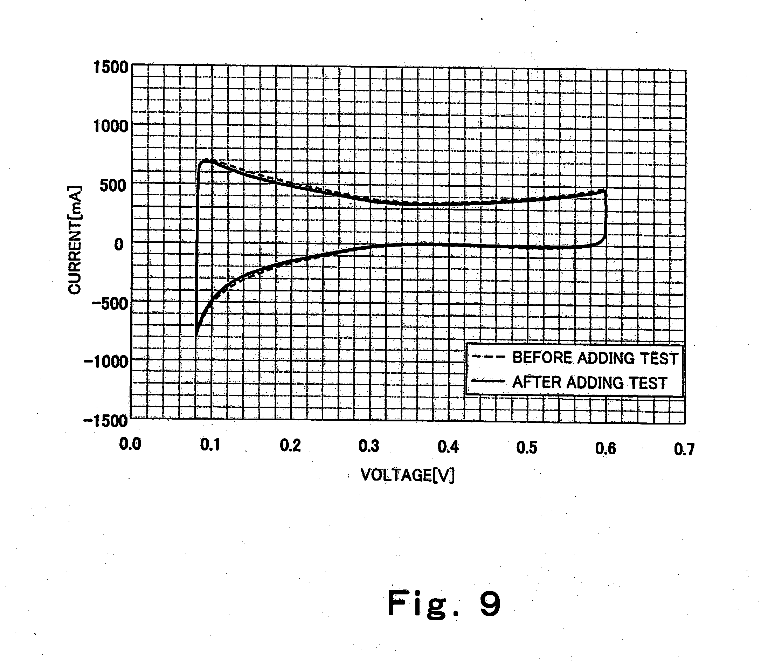

On the other hand, it was found that SO₂ poisoning did not occur in the region of the anode which is in contact with the downstream region of the fuel gas channel (hereinafter referred to as the downstream region of the anode). Also, as shown in Fig. 9, a cyclic voltammetry of the anode was measured after adding SO₂ into the cathode under a full-level humidification condition, and it was found that the anode was not poisoned. Furthermore, the fuel cell was operated under full-level humidification condition after SO₂ was added to the cathode and poisoned the anode under the low-level humidification condition. As a result, it was found that the power generation amount was restored and performance of the anode was restored.

This implies that the water present in the region of the cathode which is in contact with the downstream region of the oxidizing gas (hereinafter referred to as the downstream region of the cathode) contains SO₂ with a very low concentration. Since the water reversely diffuses during the operation under the full-level humidification condition, it is presumed that the state where a certain amount of water is present in the anode is able to effectively prevent adsorption of poisoning substances (SO₂). Furthermore, since performance of the anode poisoned under the low-level humidification condition was restored under the full-level humidification condition, it is presumed that the removal of the adsorbed poisoning substances is facilitated by flowing the water with a certain amount in the anode.

From the above, the inventors discovered that the above problem can be solved effectively by preventing that the water generated in the upstream region and the intermediate region of the cathode reversely diffuses to the anode, and by reversely diffusing the water to the anode and supplying the water which is free from the poisoning substances to the anode in the downstream region of the cathode, and thus conceived the present invention.

That is, a polymer electrolyte fuel cell of the present invention comprises an electrolyte layer-electrode assembly including an anode having an anode catalyst layer and an anode gas diffusion layer formed on the anode catalyst layer; a cathode having a cathode catalyst layer and a cathode gas diffusion layer formed on the cathode catalyst layer; and an electrolyte layer sandwiched between the anode and the cathode; an anode separator which has a plate shape and is provided with a fuel gas channel on one of main surfaces thereof; and a cathode separator which has a plate shape and is provided with an oxidizing gas channel on one of main surfaces thereof; wherein the electrolyte layer-electrode assembly is sandwiched between the main surface of the anode separator on which the fuel gas channel is provided and the main surface of the cathode separator on which the oxidizing gas channel is provided; wherein low-level humidified reactant gases are supplied to the fuel gas channel and to the oxidizing gas channel, respectively; and wherein a level of hydrophilicity of a section (hereinafter referred to as cathode gas diffusion layer upstream section) of the cathode gas diffusion layer which is opposite to an upstream region of the oxidizing gas channel including a mostupstream region thereof is set lower than a level of hydrophilicity of a section(hereinafter referred to as anode gas diffusion layer upstream opposite section) of the anode gas diffusion layer which is opposite to the cathode gas diffusion layer upstream section by making the level of hydrophilicity of an entire region of the anode gas diffusion layer upstream opposite section higher than the level of hydrophilicity of the cathode gas diffusion layer upstream section.

In such a configuration, in the cathode gas diffusion layer which is opposite to the upstream region of the oxidizing gas channel where the water contains the poisoning substances with a high concentration, water is easily discharged and a steam partial pressure decreases, because of the hydrophobicity (water-repellency), in a case where poisoning substances containing sulfur as major component is added to the oxidizing gas under a low-level humidification condition. On the other hand, since the anode gas diffusion layer which is opposite to the upstream region of the oxidizing gas channel is hydrophilic, a large part of the moisture in the fuel gas is adsorbed onto the anode gas diffusion layer and the steam partial pressure increases. Thereby, since the humidity grade formed between the anode and the cathode is higher at the anode side, the force for promoting the diffusion of water from the anode to the cathode is generated, suppressing the reverse diffusion of the water from the cathode to the anode. This makes it possible to suppress the movement of the poisoning substances from the cathode to the anode. As a result, the poisoning of the anode can be prevented.

In the polymer electrolyte fuel cell of the present invention, a level of hydrophilicity of an entire region of a section (hereinafter referred to as cathode gas diffusion layer downstream section) of the cathode gas diffusion layer which is opposite to a downstream region of the oxidizing gas channel which is other than the upstream region of the oxidizing gas channel may be set higher than a level of hydrophilicity of a section (hereinafter referred to as an anode gas diffusion layer downstream opposite section) of the anode gas diffusion layer which is opposite to the cathode gas diffusion layer downstream section.

In such a configuration, in the downstream region of the oxidizing gas channel, the associated anode gas diffusion layer is hydrophobic and the associated cathode gas diffusion layer is hydrophilic. Therefore, in the theory described above, since the humidity grade formed between the anode and the cathode is lower at the anode, the force for promoting the flow of water is generated in the direction from the cathode toward the anode, enabling the promotion of the flow of the water from the cathode to the anode. For this reason, in the section of the anode which is opposite to the downstream region of the oxidizing gas channel, there is sufficient water, and therefore, the adsorption of the poisoning substances is suppressed even if the poisoning substances move toward the anode.

Therefore, it is possible to sufficiently suppress that the poisoning substances containing sulfur as major component added to the oxidizing gas poisons the anode, and to restore performance of the anode even if the anode is poisoned.

In the polymer electrolyte fuel cell of the present invention, the fuel gas channel and the oxidizing gas channel may be configured to form a counter flow pattern.

In the polymer electrolyte fuel cell of the present invention, the level of hydrophilicity of an entire region of the cathode gas diffusion layer downstream section may be set higher than the level of hydrophilicity of the cathode gas diffusion layer upstream section.

In the polymer electrolyte fuel cell of the present invention, the level of hydrophilicity of an entire region of the anode gas diffusion layer upstream opposite section may be set higher than the level of hydrophilicity of the anode gas diffusion layer downstream opposite section.

In the polymer electrolyte fuel cell of the present invention, the fuel gas channel and the oxidizing gas channel may be configured to form a parallel flow pattern.

In the polymer electrolyte fuel cell of the present invention, the level of the entire region of the cathode gas diffusion layer downstream section may be set higher than the level of hydrophilicity of the cathode gas diffusion layer upstream section.

In the polymer electrolyte fuel cell of the present invention, the level of hydrophilicity of the entire region of the anode gas diffusion layer upstream opposite section may be set higher than the level of hydrophilicity of the anode gas diffusion layer downstream opposite section.

The above and further objects, features and advantages of the invention will more fully be apparent from the following detailed description with reference to the accompanying drawings.

### EFFECTS OF THE INVENTION

In the polymer electrolyte fuel cell of the present invention, it is possible to sufficiently suppress that the poisoning substances containing sulfur as major component added to the oxidizing gas poisons the anode.

### BRIEF DESCRIPTION OF THE DRAWINGS

Fig. 1 is a cross-sectional view schematically showing a configuration of a unit cell (cell) in a polymer electrolyte fuel cell according to Embodiment 1 of the present invention.
[Fig. 2] Fig. 2 is a front view schematically showing a configuration of a cathode separator in the cell of Fig.1.
[Fig. 3] Fig. 3 is a front view schematically showing a configuration of an anode separator in the cell of Fig. 1.
[Fig. 4] Fig. 4 is a schematic view showing a structure of the cathode separator and a structure of the anode separator of the cell of Fig. 1.
[Fig. 5] Fig. 5 is a schematic view showing a structure of a cathode separator and a structure of an anode separator of a cell in a PEFC according to Embodiment 2.
[Fig. 6] Fig. 6 is a cross-sectional view schematically showing a configuration of the cell used in experiment example 1.
[Fig. 7] Fig. 7 is a schematic view showing a configuration of the outer surfaces of the cathode separator and a current collector of Fig. 6.
[Fig. 8] Fig. 8 is a graph showing plots of current values obtained from oxidation and reduction reactions in a cathode before and after an adding test in the experiment example 1.
[Fig. 9] Fig. 9 is a graph showing plots of current values obtained from oxidation and reduction reactions in an anode before and after the adding test in the experiment example 1.
[Fig. 10] Fig. 10 is a graph showing plots of current values obtained from oxidation and reduction reactions in the cathode before and after an adding test in the experiment example 2.
[Fig. 11] Fig. 11 is a graph showing plots of current values obtained from oxidation and reduction reactions in the anode before and after the adding test in the experiment example 2.
[Fig. 12] Fig. 12 is a graph showing plots of current values obtained from oxidation and reduction reactions in the anode before and after the adding test in the experiment example 2.
[Fig. 13] Fig. 13 shows a humidity at an oxidizing gas outlet in a state where air utilization rate in PEFC in experiment example 3 is changed and a humidity at an oxidizing gas outlet in a state where air utilization rate in PEFC in comparative example 1 is changed.
[Fig. 14] Fig. 14 shows a humidity at a fuel gas outlet in a state where air utilization rate in PEFC in experiment example 3 is changed and a humidity at a fuel gas outlet in a state where air utilization rate in PEFC in comparative example 1 is changed.
[Fig. 15] Fig. 15 is a table showing results of an adding test in PEFCs in experiment example 4 and comparative examples 2 and 3.
[Fig. 16] Fig.16 is a graph showing plots of current values obtained from oxidation and reduction reactions in the anode of the PEFC in comparative example 2
[Fig. 17] Fig. 17 is a graph showing plots of current values obtained from oxidation and reduction reactions in the anode of the PEFC in experiment example 4.

### EXPLANATION OF REFERENCE NUMERALS

- 1: polymer electrolyte membrane (electrolyte layer)
- 2: cathode catalyst layer
- 3: cathode gas diffusion layer
- 3a: cathode gas diffusion layer hydrophobic section
- 3b: cathode gas diffusion layer hydrophilic section
- 4: cathode
- 5: anode catalyst layer
- 6: anode gas diffusion layer
- 6a: anode gas diffusion layer hydrophobic section
- 6b: anode gas diffusion layer hydrophilic section
- 7: anode
- 8: MEA (membrane-electrode-assembly)
- 9: gasket
- 10: cathode separator
- 11: anode separator
- 12: oxidizing gas channel
- 12a: reciprocating section
- 12b: inverted section
- 13: fuel gas channel
- 13a: reciprocating section
- 13b: inverted section
- 14: heat medium channel
- 15: current collector
- 21: fuel gas supply manifold hole
- 22: fuel gas exhaust manifold hole
- 23: oxidizing gas supply manifold hole
- 24: oxidizing gas exhaust manifold hole
- 25: heat medium supply manifold hole
- 26: heat medium discharge manifold hole
- 100: cell
- P1: region
- P2: region
- P3: region
- P4: region
- P5: region
- P6: region
- P7: region
- P8: region
- P9: region
- P10: region
- P11: region
- P12: region
- P13: region
- P14: region
- P15: region
- P16: region
- P17: region
- P18: region
- P19: region
- P20: region
- P21: region
- P22: region
- P23: region
- P24: region.

### BEST MODE FOR CARRYING OUT THE INVENTION

Hereinafter, preferred embodiments of the present invention will be described with reference to the drawings. Throughout the drawings, the same or corresponding components are designated by the same reference numerals and repetitive description thereof will be omitted in some cases.

### (Embodiment 1)

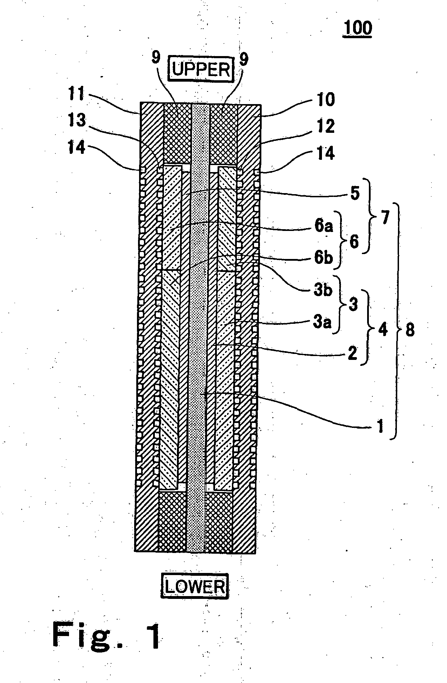

Fig. 1 is a cross-sectional view schematically showing a configuration of a unit cell (cell) in a polymer electrolyte fuel cell (hereinafter to as PEFC) according to Embodiment 1 of the present invention. In Fig. 1, the upper and lower sides of the cell are defined as the upper side and lower sides in the Figure.

As shown in Fig. 1, a cell 100 of the PEFC according to Embodiment 1 includes a MEA (Membrane-Electrode-Assembly) 8, gaskets 9, an anode separator 11 and a cathode separator 10.

Initially, the MEA 8 will be described.

The MEA 8 includes a polymer electrolyte membrane (electrolyte layer) which selectively transports hydrogen ions, a cathode 4 including a cathode catalyst layer 2 and a cathode gas diffusion layer 3, and an anode 7 including an anode catalyst layer 5 and an anode gas diffusion layer 6. The polymer electrolyte membrane 1 has a substantially quadrilateral (in this embodiment rectangular) shape. The cathode 4 and the anode 7 (these are referred to as a gas diffusion electrode) are provided on the both surfaces of the polymer electrolyte membrane 1 to be located inward of the peripheral portion thereof. Manifold holes such as a fuel gas supply manifold hole as described later are provided to penetrate through the peripheral portion of the polymer electrolyte membrane 1 in a thickness direction (not shown).

The cathode 4 includes the cathode catalyst layer 2 which is provided on one of the main surfaces of the polymer electrolyte membrane 1 and contains as major component carbon powder carrying a platinum-based metal catalyst, and the cathode gas diffusion layer 3 which is provided on the cathode catalyst layer 2 and has gas permeability and electric conductivity. The cathode gas diffusion layer 3 includes a cathode gas diffusion layer hydrophobic section 3a and a cathode gas diffusion layer hydrophilic section 3b. The cathode gas diffusion layer hydrophilic section 3b having a substantially rectangular shape as viewed from a thickness direction thereof is located above the cathode gas diffusion layer hydrophobic section 3a having a substantially rectangular shape as viewed from a thickness direction thereof. Likewise, the anode 7 includes an anode catalyst layer 5 which is provided on the other of the main surfaces of the polymer electrolyte membrane 1 and contains as major component carbon powder carrying a platinum-based metal catalyst, and an anode gas diffusion layer 6 which is provided on the anode catalyst layer 5 and has gas permeability and electric conductivity. The anode gas diffusion layer 6 includes an anode gas diffusion layer hydrophobic section 6a and an anode gas diffusion layer hydrophilic section 6b. The anode gas diffusion layer hydrophobic section 6a having a substantially rectangular shape as viewed from a thickness direction thereof is located above the anode gas diffusion layer hydrophilic section 6b having a substantially rectangular shape as viewed from a thickness direction thereof. The detail of the structure of the cathode gas diffusion layer 3 and the anode gas diffusion layer 6 will be described later.

Next, components of the MEA8 will be described.

The polymer electrolyte membrane 1 has proton conductivity. The polymer electrolyte membrane 1 desirably includes sulfonic acid group, carboxylic acid group, phosphonic acid group or sulfonimide group, as cation exchange group. In light of the proton conductivity, the polymer electrolyte membrane 1 more desirably includes sulfonic acid group.

The material of the polymer electrolyte is desirably a perfluorocarbon copolymer including a polymer unit based on perfluoro vinyl compound expressed as CF₂ = CF-(OCF₂CFX)ₘ-Oₚ -(CF₂)ₙ-SO₃H(m: integers of 0 ∼ 3, n: integers of 1 -12, p: 0 or 1, X: fluorine atom or trifluoromethyl group), and a polymer unit based on tetrafluoroethylene.

The configuration of the cathode catalyst layer 2 and the anode catalyst layer 5 is not particularly limited so long it is capable of achieving the advantage of the present invention. They may have the same configuration as the catalyst layers of the gas diffusion electrodes of a known fuel cell. For example, they may include electrically-conductive carbon particles (powder) carrying electrode catalyst and polymer electrolyte having cation (hydrogen ion) conductivity. They may further include water-repellent material such as polytetrafluoroethylene. The cathode catalyst layer 2 and the anode catalyst layer 5 may have the same configuration or a different configuration.

As the polymer electrolyte, the material forming the above described polymer electrolyte membrane 1 may be used, or a different material may be used. As the electrocatalyst, metal particles may be used. The metal particles are not particularly limited but may be made of various metals. Nonetheless, in light of the electrode reaction activity, they may be made of at least one metal selected from the group consisting of platinum, gold, silver, ruthenium, rhodium, palladium, osmium, iridium, chrome, iron, titanium, manganese, cobalt, nickel, molybdenum, tungsten, aluminum, silicon, zinc, and tin. Among them, platinum, or alloy including platinum and at least one metal selected from the above-identified metal group is desirable. Alloy of platinum and ruthenium is particularly desirable to stabilize the activity of the catalyst in the anode gas diffusion layer 5.

The cathode gas diffusion layer 3 and the anode gas diffusion layer 6 are formed by carbon woven fabric, carbon non-woven fabric, carbon paper, carbon powder sheet, etc.

Next, the remaining components of the cell 100 will be described.

As shown in Fig. 1, a pair of gaskets 9 which are of an annular and substantially rectangular shape and are made of fluorine-containing rubber are disposed on the periphery of the cathode 4 and the periphery of the anode 7 of the MEA having the above structure so as to sandwich the polymer electrolyte membrane 1. Thereby, leak of the fuel gas, air, and the oxidizing gas to outside the fuel cell is prevented, and adding of these gases within the cell 100 is prevented. Manifold holes such as a fuel gas supply manifold hole as described later are provided to penetrate through the peripheral portions of the gaskets 9 in a thickness direction.

The electrically-conductive cathode separator 10 and the electrically-conductive anode separator 11 are provided so as to sandwich the MEA 8 and the gaskets 9. Thereby, the MEA 8 is mechanically fastened and adjacent MEAs 8 are electrically connected in series to each other. As the separators 10 and 11, resin-impregnated graphite plates which are produced by impregnating the graphite plates with phenol resin and hardening them are used. Alternatively, the separators 10 and 11 may be made of a metal material such as SUS.

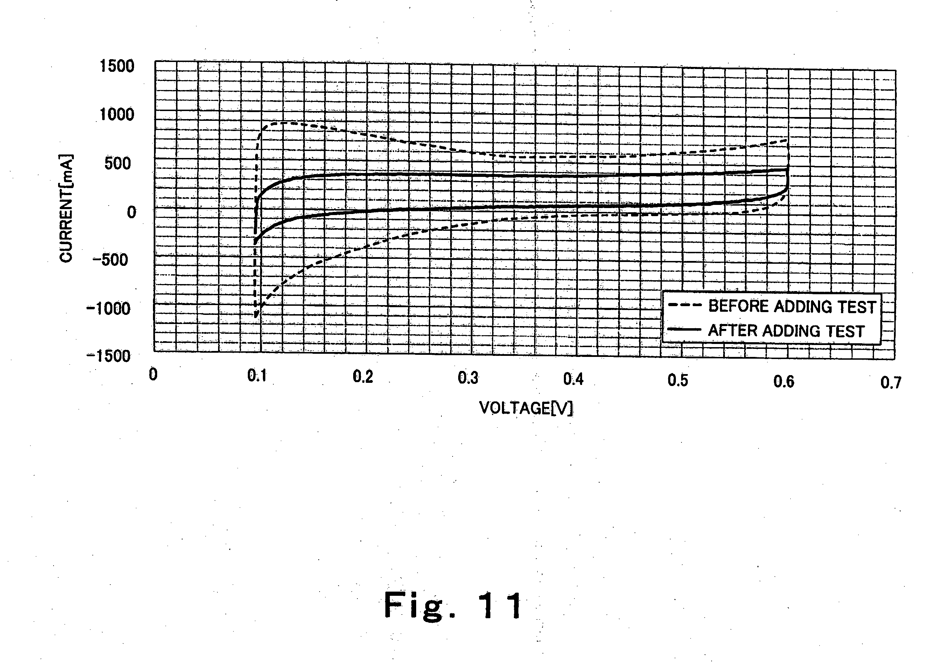

The cathode separator 10 and the anode separator 11 will be described in detail with reference to Figs. 11 to 3.

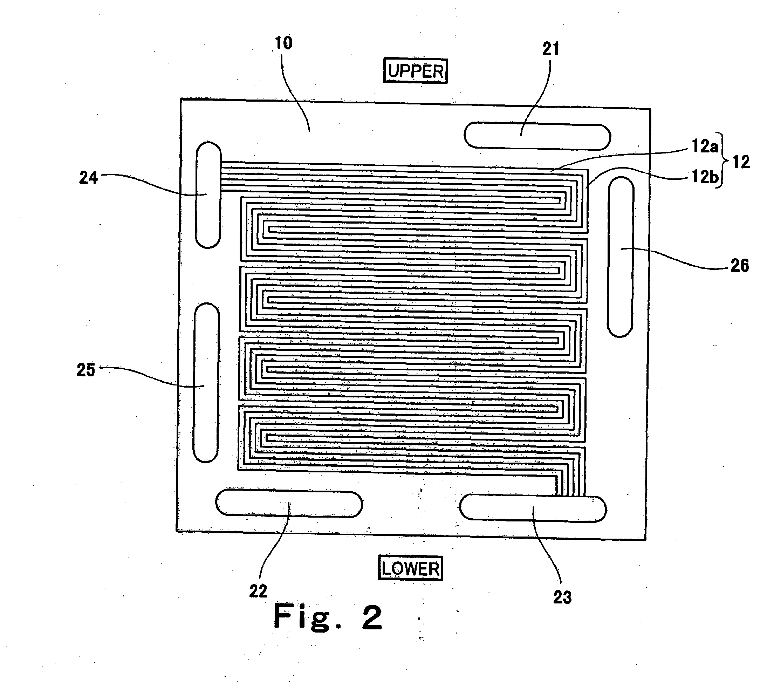

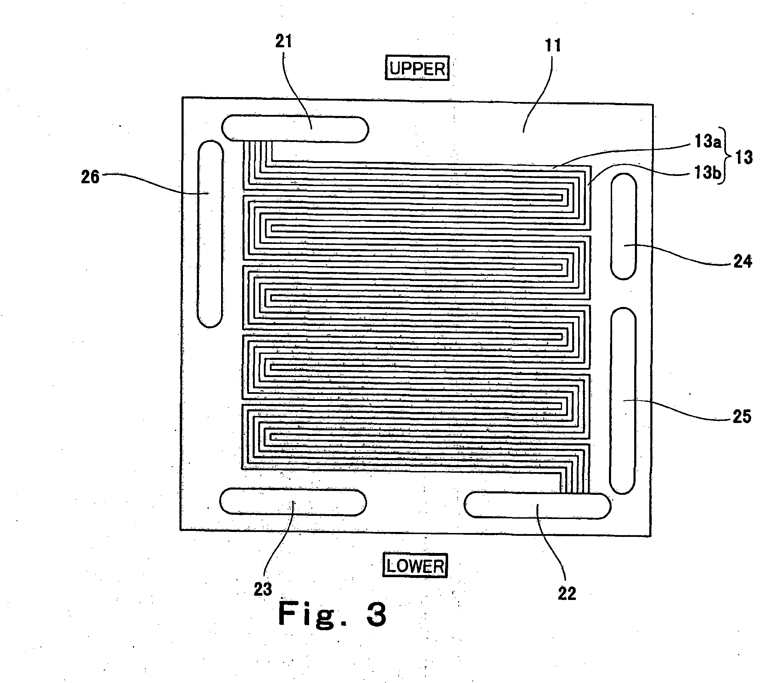

Fig. 2 is a front view schematically showing a configuration of the cathode separator 10 in the cell 100 of Fig. 1. Fig. 3 is a front view schematically showing a configuration of the anode separator 11 in the cell 100 of Fig. 1. In Figs. 2 and 3, the upper and lower sides of the cathode separator 10 and the anode separator 11 indicate the upper and lower sides in these Figures.

As shown in Fig. 2, the cathode separator 10 is formed of a plate and has a substantially rectangular shape. Manifold holes such as a fuel gas supply manifold hole 21 is provided to penetrate through the peripheral portion of the cathode separator 10 in a thickness direction thereof. To be specific, the fuel gas supply manifold hole 21 is provided at one end portion (hereinafter referred to as first end portion) of the upper portion of the cathode separator 10. A fuel gas exhaust manifold hole 22 is provided at the other end portion (hereinafter referred to as second end portion) of the lower portion of the cathode separator 10 and an oxidizing gas supply manifold hole 23 is provided at the first end portion side. An oxidizing gas exhaust manifold hole 24 is provided at the upper portion of the second end portion of the cathode separator 10, and a heat medium supply manifold hole 25 is provided at the lower portion of the second end portion. Furthermore, a heat medium discharge manifold hole 26 is provided at the upper portion of the first end portion of the cathode separator 10.

As shown in Figs. 1 and 2, a groove-shaped oxidizing gas channel 12 is formed in a serpentine shape on one main surface (hereinafter referred to as inner surface) of the cathode separator 10 which is in contact with the MEA 8 so as to connect the oxidizing gas supply manifold hole 23 to the oxidizing gas exhaust manifold hole 24. The oxidizing gas channel 12 is formed by three channel grooves. Each channel groove is substantially formed by a reciprocating section 12a and an inverted section 12b.

To be specific, each channel groove of the oxidizing gas channel 12 extends upward a certain distance from the first end portion side of the oxidizing gas supply manifold hole 23 and extends therefrom horizontally a certain distance toward the second end portion. Then, from that point, the channel groove extends upward a certain distance and extends therefrom horizontally a certain distance toward the first end portion. The channel groove repeats the above extension pattern three times and extends therefrom horizontally so as to reach the upper portion of the oxidizing gas exhaust manifold hole 24. The reciprocating section 12a is formed by the horizontally extending portion of the oxidizing gas channel 12, while the inverted section 12b is formed by the upwardly extending portion of the oxidizing gas channel 12.

As shown in Fig. 1, the groove-shaped heat medium channel 14 is formed on the other main surface (hereinafter referred to as an outer surface) of the cathode separator 10. The heat medium channel 14 has the same structure as the oxidizing gas channel 12 and is formed in a serpentine shape so as to connect the heat medium supply manifold hole 25 to the heat medium discharge manifold hole 26 (not shown).

As shown in Figs. 1 and 3, a groove-shaped fuel gas channel 13 is formed in a serpentine shape on one of main surfaces (hereinafter referred to as inner surface) of the anode separator 11 which is in contact with the MEA 8 so as to connect the fuel gas supply manifold hole 21 to the fuel gas exhaust manifold hole 22. The fuel gas channel 13 includes three channel grooves. Each channel groove is substantially formed by a reciprocating section 13a and an inverted section 13b.

To be specific, the fuel gas channel 13 extends downward a certain distance from one end portion side of the fuel gas supply manifold hole 21 and extends therefrom horizontally a certain distance toward the second end portion. Then, from that point, the fuel gas channel 13 extends downward a certain distance and extends therefrom horizontally a certain distance toward the first end portion. The fuel gas channel 13 repeats the above extension pattern three times, extends therefrom a certain distance toward the second end portion, and extends from the tip end thereof downward so as to reach the fuel gas exhaust manifold hole 22. The reciprocating section 13a is formed by the horizontally extending portion of the fuel gas channel 13, and the inverted section 13b is formed by the downwardly extending portion of the fuel gas channel 13. As shown in Fig. 1, the groove-shaped heat medium channel 14 is formed on the main other surface (hereinafter referred to as outer surface) of the anode separator 11.

Although each of the oxidizing gas channel 12 and the fuel gas channel 13 includes three channel grooves, the channel structure is not limited to this but can be designed as desired within a scope of the present invention. Although the reciprocating sections 12a and 13a are each formed by the horizontally extending portion and the inverted sections 12b and 13b are each formed by the vertically extending portion, these sections are not limited to such a structure. The reciprocating sections 12a and 13a may be formed so as to extend vertically and the inverted sections 12b and 13b may be formed so as to extend horizontally so long as the reciprocating sections 12a and 13a extend in parallel with each other and the inverted sections 12b and 13b extend in parallel with each other.

The cells 100 formed as described above are stacked in the thickness direction to form a cell stack structure. Thereby, the manifold holes such as the fuel gas supply manifold hole 21 provided on the polymer electrolyte membrane 1, the gaskets 9, the cathode separator 10, and the anode separator 11 are connected to be each other in the thickness direction in a state where the cells 100 are stacked to form manifolds such as a fuel gas supply manifold. Then, the current collectors and the insulating plates are disposed at both ends of the cell stack structure and end plates are disposed at both ends thereof. These are stacked using fastener members, forming the cell stack (PEFC).

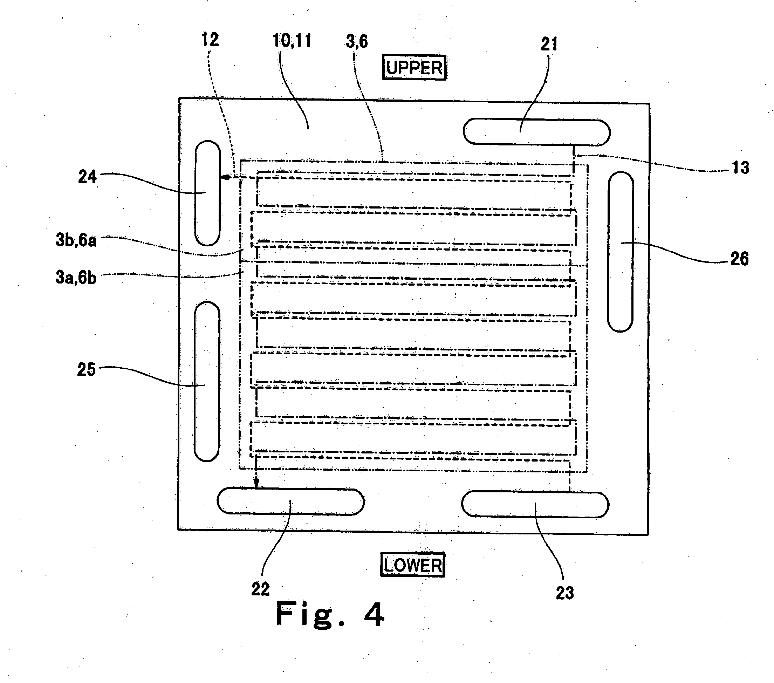

Next, a flow of the reactant gases and a structure of the gas diffusion layers in the cells 100 of the PEFC according to Embodiment 1 will be described with reference to Figs. 1 and 4.

Initially, the flow of the reactant gases will be described.

Fig. 4 is a schematic view showing the structure of the cathode separator 10 and the structure of the anode separator 11 of the cell 100 of Fig. 1. In Fig. 4, the cathode separator 10 and the anode separator 11 are drawn in a perspective manner as viewed from the thickness direction of the cells 100. The oxidizing gas channel 12 of the cathode separator 10 and the fuel gas channel 13 of the anode separator 11 are each expressed as a single line, and the upper and lower sides of the separators 10 and 11 are expressed as the upper and lower sides in Fig. 4.

As shown in Fig. 4, the oxidizing gas channel 12 and the fuel gas channel 13 are configured so as to form a counter flow pattern. To be specific, the oxidizing gas channel 12 and the fuel gas channel 13 have regions where the oxidizing gas and the fuel gas flow along each other but the oxidizing gas and the fuel gas (macroscopically) entirely flow in opposite directions in a direction from an upstream side to a downstream side, as viewed from the thickness direction of the cell 100.

Next, the flow of the reactant gases and the structure of the gas diffusion layers will be described in detail.

As shown in Figs. 1 and 4, the cathode gas diffusion layer 3 includes the substantially rectangular cathode gas diffusion layer hydrophobic section (cathode gas diffusion layer upstream section) 3a and the substantially rectangular cathode gas diffusion layer hydrophilic section (cathode gas diffusion layer downstream section) 3b. The cathode gas diffusion layer hydrophobic section 3a is formed opposite to an upstream channel of the oxidizing gas channel 12 and the cathode gas diffusion layer hydrophilic section 3b is formed opposite to a downstream channel thereof. The cathode gas diffusion layer hydrophobic section 3a occupies a region of 64% of the entire region of the cathode gas diffusion layer 3 and extends in a range from the mostupstream region (upstream end) of the oxidizing gas channel 12 which is in contact with the cathode gas diffusion layer 3 toward a downstream region (in Fig. 4, from the lowermost region toward an upper region), and the cathode gas diffusion layer hydrophilic section 3b is formed by the remaining region.

The anode gas diffusion layer 6 includes the substantially rectangular anode gas diffusion layer hydrophobic section (anode gas diffusion layer downstream opposite section) 6a and the substantially rectangular anode gas diffusion layer hydrophilic section (anode gas diffusion layer upstream opposite section) 6b. The anode gas diffusion layer hydrophobic section 6a is formed opposite to an upstream channel of the fuel gas channel 13 and the anode gas diffusion layer hydrophilic section 6b is formed opposite to a downstream channel thereof. In other words, the anode gas diffusion layer hydrophobic section 6a is formed opposite to the cathode gas diffusion layer hydrophilic section 3b as viewed from the thickness direction of the cell 100, while the anode gas diffusion layer hydrophilic section 6b is formed opposite to the cathode gas diffusion layer hydrophobic section 3a as viewed from the thickness direction of the cells 100. The anode gas diffusion layer hydrophobic section 6a occupies 36% of the entire region of the anode gas diffusion layer 6 and extends in a range from the mostupstream region (upstream end) of the fuel gas channel 13 which is in contact with the anode gas diffusion layer 6 toward a downstream region (in Fig. 4 from the uppermost region toward a lower region), and the anode gas diffusion layer hydrophilic section 6b is formed by the remaining region.

The cathode gas diffusion layer hydrophobic section 3a and the anode gas diffusion layer hydrophilic section 6b are formed so as to overlap each other, and the cathode gas diffusion layer hydrophilic section 3b and the anode gas diffusion layer hydrophobic section 6a are formed so as to overlap each other, as viewed from the thickness direction of the cell 100. The cathode gas diffusion layer hydrophobic section 3a and the anode gas diffusion layer hydrophobic section 6a are configured to have hydrophobicity, while the cathode gas diffusion layer hydrophilic section 3b and the anode gas diffusion layer hydrophilic section 6b are configured to have hydrophilicity over the entire region. As used herein, the term "hydrophilicity" means that the contact angle of the gas diffusion layer surface is smaller than 130 degrees to facilitate the adsorption of a steam flowing in the gas channel onto the gas diffusion layer surface, while the term "hydrophobicity" means that the contact angle of the gas diffusion layer surface is 130 degrees or larger to suppress the adsorption of the steam onto the gas diffusion layer surface. The phrase "the cathode gas diffusion layer hydrophilic section 3b or (anode gas diffusion layer hydrophilic section 6b) is configured to have hydrophilicity over the entire region" means that it does not partially include a portion which is equal in hydrophilicity level to the cathode gas diffusion layer hydrophobic section 3a and/or the anode gas diffusion layer hydrophobic section 6a. In other words, the phrase "the cathode gas diffusion layer hydrophilic section 3b or (anode gas diffusion layer hydrophilic section 6b) is configured to have hydrophilicity over an entire region" means to exclude a configuration in which a high-level hydrophilic region and a high-level hydrophobic region coexist.

The cathode gas diffusion layer hydrophobic section 3a and the cathode gas diffusion layer hydrophilic section 3b, which occupy the cathode gas diffusion layer 3, and the anode gas diffusion layer hydrophobic section 6a and the anode gas diffusion layer hydrophilic section 6b, which occupy the anode gas diffusion layer 6, are determined by experiments as described later (the amount of poisoning substances containing sulfur as major component, such as SO₂ and H₂S which enter the PEFC, the amount of catalyst carried on the catalyst layer, extent of easiness with which the poisoning substances are adsorbed onto the catalyst, the temperature in the interior of the PEFC, humidification temperature, etc.

When the dew point of the oxidizing gas is equal to the dew point of the fuel gas, there is a high chance that the concentration of the poisoning substances which have entered the upstream side of the cathode reaches a level (concentration) at which the anode 7 is poisoned, in a region less than 50% of the cathode 4 at the upstream side (upstream region of the cathode 4 which occupies 50% of the cathode 4). In this embodiment, in view of this, it is desired that the region occupied by the cathode gas diffusion layer hydrophobic section 3a occupy 50% or more of the entire region of the cathode gas diffusion layer 3 and extend in a range from the mostupstream region (upstream end) of the oxidizing gas channel 12 which is in contact with the cathode gas diffusion layer 3 toward a downstream region (from the lower end region of the cathode gas diffusion layer 3 toward an upper region). To more surely ensure durability for a long period, and to more surely lower the concentration of the poisoning substances at the downstream side of the cathode 4 rather than at the upstream side of the cathode 4 for all cases including entry of the poisoning substances with a high concentration, it is desired that the region occupied by the cathode gas diffusion layer hydrophobic section 3a occupy 100% or less of the entire region of the cathode gas diffusion layer 3 and extend in a range from the mostupstream region (upstream end) of the oxidizing gas channel 12 which is in contact with the cathode gas diffusion layer 3 toward a downstream region (from the lower end region of the cathode gas diffusion layer 3 toward an upper region.)

When the dew point of the oxidizing gas is equal to the dew point of the fuel gas, the concentration of the poisoning substances contained in the water does not reach a level (concentration) at which a voltage drop occurs, in a region less than 20% of the cathode 4 at the downstream side even when SO₂ is added to the cathode 4. In view of this, it is desired that the region occupied by the anode gas diffusion layer hydrophobic section 6a occupy 20% or more of the entire region of the anode gas diffusion layer 6 and extend in a range from the mostupsream region (upstream end) of the fuel gas channel 13 toward a downstream region (from the upper end region of the anode gas diffusion layer 6 toward a lower region). Also, there is a high chance that the concentration of the poisoning substances is low in a range of 50% or more of the cathode 4 from the upstream region. In view of this, it is desired that the region occupied by the anode gas diffusion layer hydrophobic section 6a occupy 50% or less of the entire region of the anode gas diffusion layer 6 and extend in a range from the mostupstream region (upstream end) of the fuel gas channel 13 toward a downstream region (from the upper end region of the anode gas diffusion layer 6 toward a lower region).

When the dew point of the oxidizing gas is higher than the dew point of the fuel gas, moisture (steam) contained in the oxidizing gas is more than the moisture (steam) contained in the fuel gas. Therefore, the water generated in the cathode 4 easily reversely diffuses into the anode 7, and the poisoning substances easily move from the cathode 4 to the anode 7. For this reason, it is desired that the region occupied by the cathode gas diffusion layer hydrophobic section 3a be set larger than the region occupied by the cathode gas diffusion layer hydrophilic section 3b. Conversely, it is desired that the region occupied by the anode gas diffusion layer hydrophobic section 6a be set smaller than the region occupied by the anode gas diffusion layer hydrophilic section 6b.

When the dew point of the oxidizing gas is lower than the dew point of the fuel gas, moisture (steam) contained in the oxidizing gas is less than the moisture (steam) contained in the fuel gas. Therefore, the water generated in the cathode 4 does not easily reversely diffuse to the anode 7, and the poisoning substances do not easily move from the cathode 4 to the anode 7. For this reason, the region occupied by the cathode gas diffusion layer hydrophobic section 3a may be set smaller than the region occupied by the cathode gas diffusion layer hydrophilic section 3b. Also, the region occupied by the anode gas diffusion layer hydrophobic section 6a be set larger than the region occupied by the anode gas diffusion layer hydrophilic section 6b.

The cathode gas diffusion layer hydrophilic section 3b and the anode gas diffusion layer hydrophilic section 6b are formed in such a manner that a water-repellent carbon cloth is subjected to O₂ plasma treatment and ozone treatment, while masking a predetermined region. Alternatively, the cathode gas diffusion layer hydrophilic section 3b and the anode gas diffusion layer hydrophilic section 6b are formed by impregnating a predetermined region of a water-repellent carbon cloth with an electrolytic solution (e.g., Nafion manufactured by Dupont, Co., Ltd) or a solution dissolved with polymer (e.g., perfluorocarbon sulfonic acid) having hydrophilic group such as sulfonic acid group or carboxyl group, and by drying them. In a further alternative, the cathode gas diffusion layer hydrophilic section 3b and the anode gas diffusion layer hydrophilic section 6b are formed in such a manner that a mixture containing binder resin and hydrophilic carbon particles (which is formed by subjecting carbon particles to oxidation treatment, plasma treatment, or the like) is kneaded, extruded, rolled, and calcined.

The cathode gas diffusion layer hydrophobic section 3a and the anode gas diffusion layer hydrophilic section 6b (cathode gas diffusion layer hydrophilic section 3b and the anode gas diffusion layer hydrophobic section 6a) are formed to overlap each other in this embodiment, they are not limited to this configuration, but the cathode gas diffusion layer hydrophobic section 3a and the anode gas diffusion layer hydrophilic section 6b (cathode gas diffusion layer hydrophilic section 3b and the anode gas diffusion layer hydrophobic section 6a) may be formed not to overlap each other.

Next, the advantage of the cell 100 of the PEFC according to Embodiment 1 configured as described above will be described.

It is assumed that the PEFC is operated under the low-level humidification condition (in which, in particular, the operating temperature is 60 - 120 degrees centigrade, and the dew point of the fuel gas exhausted from the hydrogen generator is 50 ∼ 70 degrees centigrade in view of the operable range of the polymer electrolyte fuel cell, and the dew point of the oxidizing gas containing moisture which is supplied to the oxidizing gas channel is 40 - 70 degrees centigrade in view of the fact that if the difference in dew point between the anode 7 and the cathode 4 is larger than 10 degrees centigrade, a difference in supply humidity is beyond an ambient humidity which is controlled in the present invention and the effect is reduced." As described above, in this case, if the poisoning substances are added to the oxidizing gas, they move toward the anode 7 according to the reverse diffusion of the water generated in the cathode 4 and poisons the anode 7 (to be specific, anode catalyst layer 5), in particular, in the upstream region of the oxidizing gas channel 12.

However, in the PEFC of Embodiment 1, the cathode gas diffusion layer hydrophobic section 3a which is hydrophobic is formed at a location opposite to an upstream region of the oxidizing gas channel 12 as viewed from the thickness direction of the cell 100, and at the location, the anode gas diffusion layer hydrophilic section 6b which is hydrophilic is formed so as to sandwich the polymer electrolyte membrane 1.

Since the cathode gas diffusion layer hydrophobic section 3a is hydrophobic (water-repellent), moisture (steam) contained in the oxidizing gas passes through without being adsorbed onto the surface of the cathode gas diffusion layer hydrophobic section 3a, the water generated in the cathode 4 is frequently discharged, a steam partial pressure at the cathode gas diffusion layer hydrophobic section 3a decreases. On the other hand, since the anode gas diffusion layer hydrophilic section 6b is hydrophilic, moisture (steam) contained in the fuel gas is adsorbed onto the surface of the anode gas diffusion layer hydrophilic section 6b, and therefore, a steam partial pressure at the anode gas diffusion layer hydrophilic section 6b increases.

Since the humidity grade formed between the cathode gas diffusion layer hydrophobic section 3a and the anode gas diffusion layer hydrophilic section 6b is higher at the anode 7 side, a force for promoting diffusion of the water from the anode 7 to the cathode 4 is generated, suppressing that the water generated in the cathode 7 reversely diffuses to the anode 7. This makes it possible to suppress that the poisoning substances added to the oxidizing gas flows toward the anode 7 at the upstream side of the oxidizing gas channel 12. Thus, poisoning of the anode 7 can be suppressed.

At the downstream side of the oxidizing gas channel 12, the cathode gas diffusion layer hydrophilic section 3b which is hydrophilic is formed, and the anode gas diffusion layer hydrophobic section 6a is formed so as to sandwich the polymer electrolyte membrane 1. Since the poisoning substances added to the oxidizing gas are adsorbed at the upstream side of the cathode catalyst layer 2, the oxidizing gas flowing in the downstream side of the oxidizing gas channel 12 is substantially free from the poisoning substances.

For this reason, contrary to the upstream side of the oxidizing gas channel 12, since the humidity grade formed between the cathode gas diffusion layer hydrophilic section 3b and the anode gas diffusion layer hydrophobic section 6a is higher at the cathode 4 side, the reverse diffusion of the water generated in the cathode 7 to the anode 7 is promoted. In this case, since the oxidizing gas flowing in the downstream side of the oxidizing gas channel 12 is substantially free from the poisoning substances, the poisoning substances do not flow to the anode 7 at the downstream side of the oxidizing gas channel 12. Thereby, since there is sufficient water in a region of the anode 7 which is at the upstream side of the fuel gas channel 13, it is possible to suppress that the poisoning substances are adsorbed onto the anode catalyst layer 5 even if there are poisoning substances there. Also, if the poisoning substances are adsorbed in a region of the anode catalyst layer 5, which is located at the upstream side of the oxidizing gas channel 14, i.e., at the downstream side of the fuel gas channel 13, the water present at the upstream side of the fuel gas channel 13 flows to a downstream side to enable the removal of the poisoning substances adsorbed onto the anode catalyst layer 5.

As should be appreciated from the above, in the PEFC of Embodiment 1, it is possible to sufficiently suppress that the poisoning substances such as a sulfur component added to the oxidizing gas poison the anode 7 under the low-level humidification condition. In addition, since the poisoning substances adsorbed onto the anode 7 can be removed, performance of the anode 7 can be restored.

### (Embodiment 2)

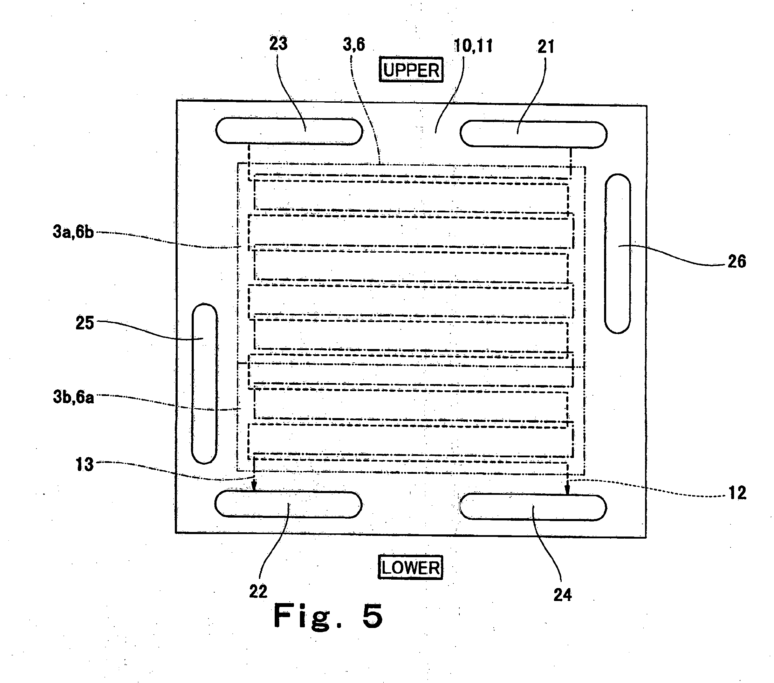

A cell of a PEFC according to Embodiment 2 of the present invention has a structure which is basically identical to the structure of the cell 100 of the PEFC of Embodiment 1 but is different from the same in that the oxidizing gas channel 12 and the fuel gas channel 13 form a parallel flow pattern. Hereinafter, the parallel flow pattern will be described with reference to Fig. 5.

Fig. 5 is a schematic view showing a structure of a cathode separator and a structure of an anode separator of a cell in a PEFC according to Embodiment 2. In Fig. 5, the cathode separator and the anode separator are drawn in a perspective manner as viewed from the thickness direction of the cells. Each channel of the oxidizing gas channel of the cathode separator and each channel of the fuel gas channel of the anode separator are drawn by a single line, and the upper and lower sides of the cathode separator and the anode separator are expressed as the upper and lower sides of the Figure.

As shown in Fig. 5, an oxidizing gas supply manifold hole 23 is provided at a second end portion side of the upper portion of each of the cathode separator 10 and the anode separator 11, while the oxidizing gas exhaust manifold hole 24 is provided at a first end portion side of the lower portion of each of the separators 10 and 11. Although the oxidizing gas channel 12 and the fuel gas channel 13 have at a part thereof a region in which the oxidizing gas and the fuel gas flow in opposite directions, they are configured to form a parallel flow pattern in which the oxidizing gas and the fuel gas flow in parallel with each other macroscopically (entirely) from the upstream region to the downstream region as viewed from the thickness direction of the cell 100.

The cathode gas diffusion layer hydrophobic section 3a is formed to extend from the mostupstream region of the oxidizing gas channel 12 toward a downstream region (in Fig. 5,the uppermost region of the cathode gas diffusion layer 3 toward a lower region), while the cathode gas diffusion layer hydrophilic section 3b is formed to extend from the mostdownstream region of the oxidizing gas channel 12 toward a upstream region (in Fig. 5, from the lowermost region of the cathode gas diffusion layer 3 toward an upper region).

When the dew point of the oxidizing gas is equal to the dew point of the fuel gas, there is a high chance that the concentration of the poisoning substances which have entered the upstream side of the cathode 4 reaches a level (concentration) at which the anode 7 is poisoned, in a region less than 50% of the cathode 4 at the upstream side thereof (upstream region of the cathode, which occupies 50% of the cathode 4). In this embodiment, in view of this, it is desired that the region occupied by the cathode gas diffusion layer hydrophobic section 3a occupy 50% or more of the entire region of the cathode gas diffusion layer 3 and extend in a range from the mostupstream region (upstream end) of the oxidizing gas channel 12 toward a downstream region (from lower end region of the cathode gas diffusion layer 3 toward an upper region). To more surely ensure durability for a long period, and to lower the concentration of the poisoning substances at the downstream side of the cathode 4 rather than at the upstream side of the cathode 4 for all cases including entry of the poisoning substances with a high concentration. In view of this, it is desired that the region occupied by the cathode gas diffusion layer hydrophobic section 3a occupy 100% or less of the entire region of the cathode gas diffusion layer 3 and extend in a range from the mostupstream region (upstream end) of the oxidizing gas channel 12 toward a downstream region (from the lower end region of the cathode gas diffusion layer 3 toward an upper region).

When the dew point of the oxidizing gas is equal to the dew point of the fuel gas, the concentration of the poisoning substances contained in the water does not reach a level (concentration) at which a voltage drop occurs, in a region of 80% or less from the upstream region toward a downstream region thereof (region within 20% of the cathode 4 at the downstream region), even when SO₂ of 0.5ppm is added to the cathode 4. In view of this, it is desired that the region occupied by the anode gas diffusion layer hydrophobic section 6a occupy 80% or more of the entire region of the anode gas diffusion layer 6 and extend in a range from the mostupstream region (upstream end) of the fuel gas channel 13 toward a downstream region (from the upper end region of the anode gas diffusion layer 6 toward a lower region). Also, there is a high chance that the concentration of the poisoning substances is low, in the region of 50% or less from the upstream region of the cathode 4. In view of this, is desired that the region occupied by the anode gas diffusion layer hydrophobic section 6a occupy 50% or less of the entire region of the anode gas diffusion layer 6 and extend in a range from the mostupstream region (upstream end) of the fuel gas channel 13 (oxidizing gas channel 12) toward a downstream region (from the upper end region of the anode gas diffusion layer 6 toward a lower region).

When the dew point of the oxidizing gas is higher than the dew point of the fuel gas, moisture (steam) contained in the oxidizing gas is more than the moisture (steam) contained in the fuel gas. Therefore, the water generated in the cathode 4 easily reversely diffuses to the anode 7, causing the poisoning substances to easily move from the cathode 4 to the anode 7. For this reason, it is desired that the region occupied by the cathode gas diffusion layer hydrophobic section 3a be set larger than the region occupied by the cathode gas diffusion layer hydrophilic section 3b. Conversely, it is desired that the region occupied by the anode gas diffusion layer hydrophobic section 6a be set smaller than the region occupied by the anode gas diffusion layer hydrophilic section 6b.

When the dew point of the oxidizing gas is lower than the dew point of the fuel gas, moisture (steam) contained in the oxidizing gas is less than the moisture (steam) contained in the fuel gas. Therefore, the water generated in the cathode 4 does not easily reversely diffuse to the anode 7, and the poisoning substances do not easily move from the cathode 4 to the anode 7. For this reason, the region occupied by the cathode gas diffusion layer hydrophobic section 3a may be set smaller than the region occupied by the cathode gas diffusion layer hydrophilic section 3b. Also, the region occupied by the anode gas diffusion layer hydrophobic section 6a may be be set larger than the region occupied by the anode gas diffusion layer hydrophilic section 6b.

Although the cathode gas diffusion layer hydrophobic section 3a and the anode gas diffusion layer hydrophilic section 6b (cathode gas diffusion layer hydrophilic section 3b and the anode gas diffusion layer hydrophobic section 6a) are formed to overlap each other in this embodiment, they are not limited to this configuration, but the cathode gas diffusion layer hydrophobic section 3a and the anode gas diffusion layer hydrophilic section 6b (cathode gas diffusion layer hydrophilic section 3b and the anode gas diffusion layer hydrophobic section 6a) may be formed not to overlap each other.

In such a configuration, even if the poisoning substances are added to the oxidizing gas in a case where the PEFC is operated under the low-level humidification condition, since the humidity grade formed between the cathode gas diffusion layer hydrophobic section 3a and the anode gas diffusion layer hydrophilic section 6b is higher at the anode 7 side, a force for promoting diffusion of the water from the anode 7 to the cathode 4 is generated, suppressing that the water generated in the cathode 7 reversely diffuses to the anode 7. This makes it possible to suppress that the poisoning substances added to the oxidizing gas move toward the anode 7 at the upstream side of the oxidizing gas channel 12. Thus, poisoning of the anode 7 can be suppressed.

Although in Embodiment 1 and 2, the oxidizing gas channel 12 and the fuel gas channel 13 are formed in a serpentine shape, the shape of these channels is not limited to this but may be other shape, so long as the reactant gases flow in almost all region of the main surfaces of the respective separators 10 and 11. In this case, the hydrophilic section and the hydrophobic section of each gas diffusion layer are determined by experiments.

Next, the experiment examples will be described.

### [Experiment example 1]

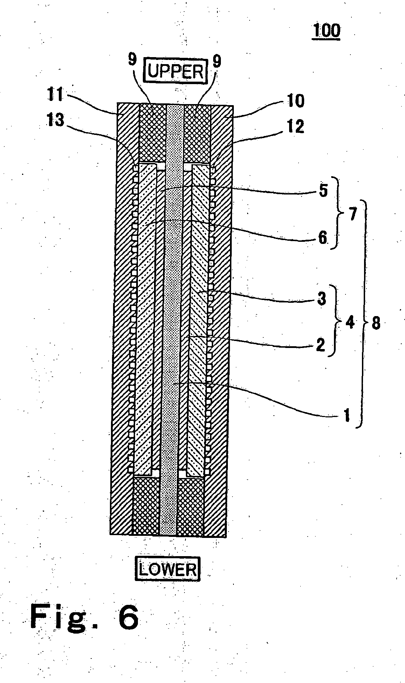

In experiment example 1, the following experiment was conducted using the cell 100 of Fig. 6.

Fig. 6 is a cross-sectional view schematically showing a configuration of the cell 100 used in experiment example 1. In Fig. 6, the upper and lower sides of the cell 100 are expressed as the upper and lower sides in the Figure.

Initially, the configuration of the cell 100 used in experiment example 1 will be described.

The cell 100 used in experiment example 1 has a configuration which is basically identical to that of the cell 100 of the PEFC of Embodiment 1 but is different from the same in the following respects.

As shown in Fig. 6, the cathode gas diffusion layer 3 and the anode gas diffusion layer 6 are each formed by a single section instead of a section which has a high level of hydrophilicity (hydrophilic section) and a section which has a high level of hydrophobicity (hydrophobic section). The oxidizing gas channel 12 formed on the inner surface of the cathode separator 10 and the fuel gas channel 13 formed on the inner surface of the anode separator 11 are configured to form a parallel flow pattern, and a heat medium channel 14 is not provided on the outer surface of each of the separators 10 and 11.

Next, a manufacturing method of the cell used in experiment example 1 will be described.

Initially, a cathode catalyst layer forming ink was prepared. Catalyst carrying particles carrying platinum particles having an average particle diameter of about 3nm on carbon particles (Pt catalyst carrying carbon) (manufactured by Tanaka Kikinzoku Kogyo K. K. 50mass %) and a polymer electrolyte solution (manufactured by ASAHI GLASS Co., Ltd. Product name "Flemion") having hydrogen ion conductivity were dispersed in a mixture dispersion medium (mass ratio 1 : 1) of ethanol and water. Further, a cathode catalyst layer forming ink was prepared so that Wp/Wcat which is a ratio of a mass Wp of the polymer electrolyte to a mass Wcat of a carrier of the catalyst carrying particles. The cathode catalyst layer 2 having a fixed catalyst surface in an entire catalyst layer region was produced by spraying the cathode catalyst layer forming ink to one main surface of the polymer electrolyte membrane 1 (manufactured by JAPAN GORE-TEX INC Product name "GSll")

Next, catalyst carrying particles (PtRu catalyst carrying carbon) carrying platinum ruthenium alloy (mass ratio; platinum : ruthenium = 1 : 1.5 mol ratio) particles on carbon particles (Tanaka Kikinzoku Kogyo K.K. 50mass % is Pt-Ru alloy), and a polymer electrolyte solution (manufactured by ASAHI GLASS Co., Ltd. Product name "Flemion") having hydrogen ion conductivity were dispersed in a mixture dispersion medium (mass ratio 1 : 1) of ethanol and water. Further, an anode catalyst layer forming ink was prepared so that Wp/Wcat which is a ratio of a mass Wp of the polymer electrolyte to a mass Wcat of a carrier of the catalyst carrying particles. The anode catalyst layer forming ink was sprayed on the other main surface of the polymer electrolyte membrane 1 to form the anode catalyst layer 5. Thus, a membrane-catalyst layer assembly was fabricated.

Then, a gas diffusion layer (manufactured by JAPAN GORE-TEX INC product name "CARBEL-CFP") including a water-repellent carbon paper and a water-repellent carbon layer containing fluorine resin and carbon which is provided one surface of the carbon paper was prepared, and the membrane-catalyst layer assembly was sandwiched between two gas diffusion layers such that the water-repellent carbon layer contacted the cathode catalyst layer 3 and the anode catalyst layer 5. The entire component was thermally pressure-bonded by hot press (120 degrees centigrade, ten minutes 10kgf/cm²), fabricating the MEA 8.

Next, fluorine-containing rubber made gaskets 9 were disposed at the periphery of the cathode 4 and the periphery of the anode 7 of the MEA 8 fabricated as described above, and these components were sandwiched between the cathode separator 10 and the anode separator 11, fabricating the cell 100. Then, at both ends of the cell 100, a pair of current collectors and a pair of insulating plates were disposed and are fastened by a fastener tool, forming the PEFC. At this time, the current collector which is in contact with the cathode separator 10 was divided into 27 regions as shown in Fig. 7.

Hereinafter, the current collector will be described.

Fig. 7 is a view of a schematic configuration of the outer surfaces of the cathode separator 10 and the current collector shown in Fig. 6. In Fig. 7, they are drawn in a perspective manner as viewed from the thickness direction of the current collector. Each channel of the oxidizing gas channel 12 of the cathode separator 10 is expressed as a single line, and the upper and lower sides of the cathode separator 10 are expressed as the upper and lower sides in the Figure.

Initially, the current collector was divided into 3 parts horizontally and into 9 parts vertically, forming 27 small pieces. In this case, the mostupstream region along the oxidizing gas channel 12 was determined as a region P1 and the mostdownstream region was determined as a region P27. Then, the peripheral surfaces of the respective small pieces of the regions P1 to P27 were covered with plates made of insulative fluorine resin and were bonded to be arranged in the order of P1 to P27 (to form the original current collector 25).

The resulting PEFC was controlled so that the temperature of the cell 100 reached 65 degrees centigrade, a hydrogen gas as the fuel gas was supplied to the fuel gas channel 13, and air as the oxidizing gas was supplied to the oxidizing gas channel 12. In this case, with a hydrogen gas utilization rate being set to 70% and an air utilization rate being set to 50%, the hydrogen gas and the air were supplied to the PEFC, after they were humidified so that their dew points reached about 65 degrees centigrade. Then, while measuring a power generation distribution of the 27 regions (region P1 ~ region P27), the current density of power generation was controlled to reach 0.2A/cm², and under the condition, the PEFC was operated (hereinafter this condition is referred to as "full-level humidification power generation condition").

The power generation was stopped when the PEFC became stable. The hydrogen gas of 100RH% was supplied to the anode 7 with 300ml/min, and the nitrogen gas of 100RH% was supplied to the cathode 4 with 300ml/min. The temperature of the cell 100 was kept at 65 degrees centigrade. Then, two-electrode cyclic voltammetry measurement was conducted assuming that the anode 7 was a reference electrode (imaginary standard hydrogen electrode) and the cathode 4 was a working electrode. In the measurement, the potential of the cathode 4 on the basis of the anode 7 was swept in a range of +1.0V from a natural potential. To be specific, the potential of the cathode 4 was swept from the natural potential to + 1.0V at a potential sweep speed of 10mV/sec, and then the potential sweep direction was inverted. One cycle was defined as a process for sweep the potential of the cathode 4 from +1.0V to the natural potential at an equal sweep speed, and the current values (oxidation current value, reduction current value) resulting from oxidation and reduction reactions in the cathode 4 were measured (hereinafter referred to as "cathode CV measurement method").

A hydrogen gas of 100RH% was supplied to the cathode 4 with 300ml/min, and a nitrogen gas of 100RH% was supplied to the anode 4 with 300ml/min. The temperature of the cell 100 was kept at 65 degrees centigrade. Then, two-electrode cyclic voltammetry measurement was conducted assuming that the cathode 4 was a reference electrode and the anode 7 was a working electrode. Similarly to the operation of the cathode 4, in the cyclic voltammetry measurement, the potential of the anode 7 was swept in a range of +0.6V from a natural potential and the current values (oxidation current value, reduction current value) resulting from oxidation and reduction reactions in the anode 7 were measured (hereinafter referred to as "anode CV measurement method").

Next, power generation was performed for 130 hours under the full-level humidification power generation condition, and SO₂ added to the oxidizing gas channel 12 such that its concentration became 1ppm (adding test) when the power generation distribution became stable. Immediately after the adding, the power generation amount in the region P1 ~ region P9 drastically dropped. With further adding, the power generation amount in the region P10 - region P18 gradually decreased, whereas the power generation amount in the region P19 ~ region P27 gradually increased.

Then, the adding of SO₂ was stopped after a lapse of 220 hours after the adding of SO₂. When the power generation continued using a clean oxidizing gas, the decreased power generation amount in the region P1 ~ the region P18 increased somewhat, but did not return to the power generation amount before the adding, and the power generation amount in the region P19 - region P27 was kept in the increased state.

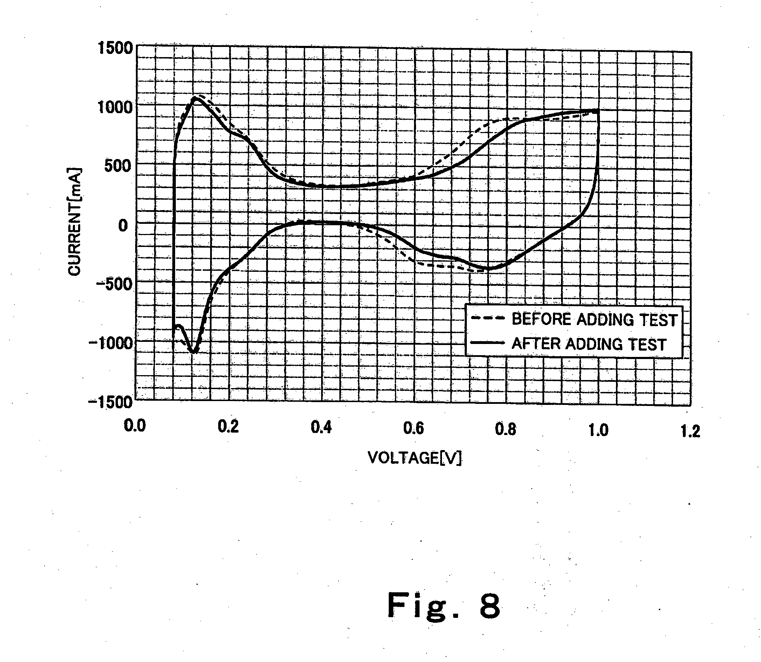

For the PEFC under the state, the electrode characteristic was measured by the cathode CV measurement method and the anode CV measurement method, similar to the initial state. Fig. 8 is a graph showing plots of current values obtained from oxidation and reduction reactions in the cathode 4 before and after the adding text in experiment example 1. Fig. 9 is a graph showing plots of current values obtained from oxidation and reduction reactions in the anode 7 before and after the adding test in experiment example 1. In Figs. 8 and 9, broken lines indicate result of cyclic voltammogram before the adding test and solid lines indicate result of cyclic voltammogram after the adding test.

As shown in Fig. 8, the peak around 0.8V changed in the cathode 4 before and after the adding test, and it may be presumed that the cathode 4 was poisoned by SO₂. On the other hand, as shown in Fig. 9, no substantial change occurred in the anode 7 before and after the adding test, and it was found that the anode 7 was not poisoned by SO₂.

The above result indicates that the poisoning substances (SO₂) added to the oxidizing gas were adsorbed onto the cathode catalyst 2 such that the region to which the poisoning substances were adsorbed shifted gradually from the upstream side of the oxidizing gas channel 12 to the downstream side, under the full-level humidification condition. In addition, the result indicates that since poisoning did not occur in the region (region P19 - region P27) of the cathode 3 at the downstream side of the oxidizing gas channel 12, and therefore the water present at the downstream side of the oxidizing gas channel 12 contained the poisoning substances with a very low concentration. This may be due to the fact that since the poisoning substances are adsorbed tightly to the catalyst and are not dissociated, they continued to be adsorbed until the region to which the poisoning substances are adsorbed is not left in the region P1 (the region P1 is fully poisoned) and does not flow to a downstream side.

### [Experiment example 2]

In experiment example 2, using the PEFC having a configuration similar to that of the PEFC used in experiment example 1, the experiment was conducted.

Initially, as in experiment example 1, the PEFC was caused to perform the power generation under the full-level humidification power generation condition, and the power generation was stopped when the power generation became stable. With the cathode CV measurement method and the anode CV measurement method, the characteristic of the electrode was measured.

Then, the cell temperature of the PEFC was controlled so as to reach 80 degrees centigrade, a hydrogen gas as the fuel gas was supplied to the fuel gas channel 13, and air as the oxidizing gas was supplied to the oxidizing gas channel 12. In this case, with a hydrogen gas utilization rate being set to 70% and an air utilization rate being set to 50%, the hydrogen gas and the air were supplied to the PEFC, after they were humidified so that their dew points reached about 65 degrees centigrade. Then, while measuring a power generation distribution of the 27 regions (region P1 ~ region P27), the current density of power generation was controlled to reach 0.2A/cm², and under the condition, the PEFC was operated (hereinafter this condition is referred to as "low-level humidification power generation condition").

The PEFC was operated for 100hours under the low-level humidification power generation condition, and SO₂ was added to the oxidizing gas channel 12 such that its concentration became 1ppm (adding test) when the PEFC became sufficiently stable. As in experiment example 1, just immediately the adding of SO₂ to the oxidizing gas, the power generation amount in the region P1 ∼ region P9 dropped. With further adding, the power generation amount in the region P10 - region P21 drastically dropped, whereas the power generation amount in the region P22 - region P27 drastically increased, after a lapse of 180 hours (after a lapse of 80 hours after adding of SO₂). Thereafter, the adding of SO₂ was stopped after a lapse of 240 hours after the adding of SO₂, and the power generation continued using a clean oxidizing gas, but the voltage was not restored noticeably.

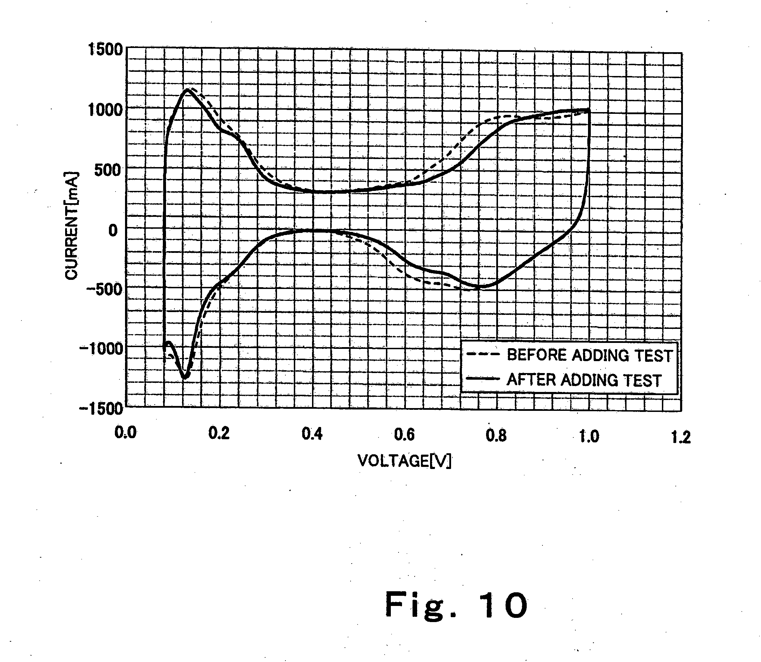

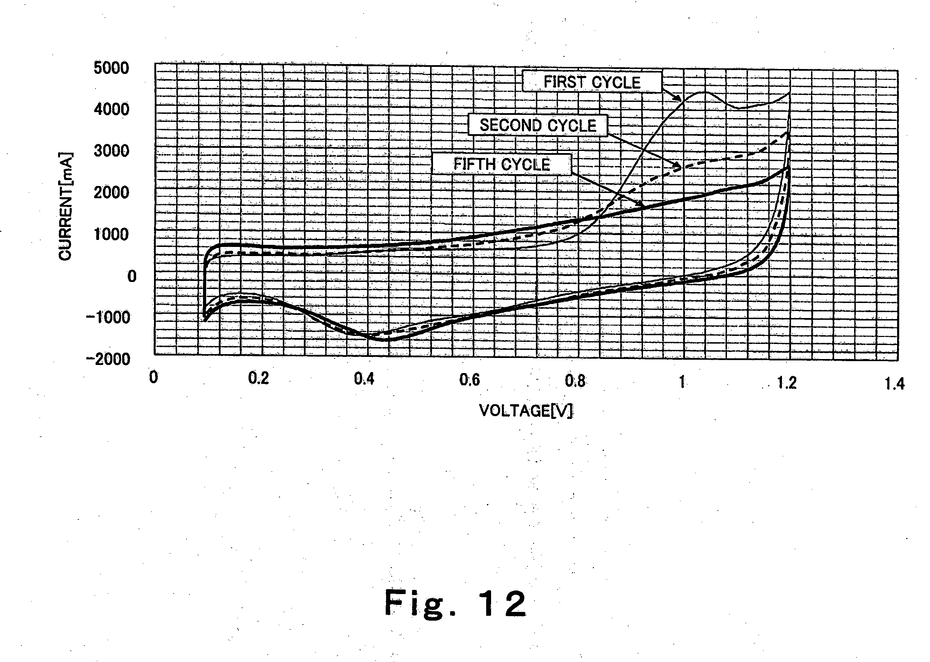

For the PEFC under this state, the electrode characteristic was measured with the cathode CV measurement method and the anode CV measurement method as in an initial stage. Fig. 10 is a graph showing plots of current values obtained from oxidation and reduction reactions in the cathode 4 before and after the adding test in experiment example 2. Figs. 11 and 12 are graphs showing plots of current values obtained from oxidation and reduction reactions in the anode 7 before and after the adding test in experiment example 2. In Figs. 10 and 11, broken lines indicate result of cyclic voltammogram before the adding test and solid lines indicate result of cyclic voltammogram after me adding test.

As shown in Fig. 10, as in experiment example 1, the peak around 0.8V changed before and after the adding test, and it may be presumed that the cathode 4 was poisoned by SO₂. On the other hand, as shown in Fig. 11, the peak significantly reduced due to the adsorption and removal of hydrogen (atoms) near 0.2V before and after the adding test.

Thereafter, for the anode 7, an experiment was conducted in which the upper limit potential to be controlled in the cyclic voltammetry measurement was increased up to 1.2V Fig. 12 shows the result. As shown in Fig. 12, it was confirmed that the peak (+0.8V - +1.2V) of the current value of the anode 7 measured in a first cycle was decreased by sweeping the electric potential of the anode 7 (second cycle or fifth cycle), i.e., by applying the voltage between the anode 7 and the cathode 4, and the poisoning substances were removed by oxidation.

From the above result, it may be considered that, in the operation under the low-level humidification condition, the poisoning substance added to the oxidizing gas was adsorbed onto the cathode catalyst 2 for about 80 hours after adding SO₂ similarly to the operation under the full-level humidification condition, but thereafter the poisoning of the region of the anode 7 opposite to the intermediate region of the oxidizing gas channel 12 was noticeably observed, so that the power generation amount in the region P10 ∼ region P21 drastically dropped, and the power generation amount in the region P22 - region P27 drastically increased. In the experiment example 2, as in the experiment example 1, the cathode 7 was poisoned until about 80 hours after adding SO₂ which was presumed from the fact that the power generation amount in the region P1 ∼ region P9 decreased similarly to the experiment example 1 and the result of the cyclic voltammogram of the cathode 4 changed similarly to the result of the experiment example 1. It is presumed that the phenomenon that the rapid change after a lapse of 80 hours after adding SO₂ was due to the poisoning of the anode 7, because such a phenomenon was not observed in the experiment example 1 in which the anode 7 was not poisoned.

From the results of experiment example 1 and experiment example 2, it may be presumed that in the operation under the so-called low-level humidification operation, reverse diffusion occurs in the region of the cathode 4 which is opposite to the intermediate region of the oxidizing gas channel 12, and at this time, SO₂ added to the oxidizing gas moves together with water toward the anode 7 and poisons the anode 7. In addition, it may be presumed that the water present at the downstream side of the oxidizing gas channel 12 contains poisoning substances with a very low concentration, because the region (region P19 - region P27) of the cathode 3 opposite to the downstream side of the oxidizing gas channel 12 is not poisoned. Furthermore, since there is reversely diffused water in the operation under the full-level humidification condition, it is expected that the state where water with a certain amount is present at the anode 7 is able to effectively avoid the adsorption of the poisoning substances (SO₂). Moreover, from the fact that performance of the anode 7 poisoned under the low-level humidification condition was restored under the full-level humidification condition, the removal of the adsorbed poisoning substance is facilitated by flowing the water with a certain amount in the anode 7.

Therefore, in the so-called low-level humidification operation, it is effective to prevent that the water present in the cathode 4 from the upstream region to the intermediate region of the oxidizing gas channel 12, which contains poisoning substances with a high concentration, reversely diffuses to the anode 7, and it is effective to promote the reverse diffusion of the water to the cathode 7 and supply clean water to the anode 7 at the downstream region of the oxidizing gas channel 12 where the poisoning substances are low in concentration.

Although the region of the anode opposite to the intermediate region of the oxidizing gas channel was poisoned in the present experiment example, the region of the anode opposite to the upstream region of the oxidizing gas channel may be sometimes poisoned.

### [Experiment example 3, Comparative example 1]

Initially, cells 10 used in experiment example 3 and comparative example 1 will be described.

The cells 100 used in experiment example 3 and comparative example 1 have a configuration which is basically identical to that of the cell 100 in experiment example 1, but are different from the same in the structure of the gas diffusion layer as follows.

In the cell 100 in experiment example 3, a gas diffusion layer (manufactured by JAPAN GORE-TEX INC product name "CARBEL-CL") including a water-repellent carbon cloth and a water-repellent carbon layer containing fluorine resin and carbon which is provided on one surface of the carbon cloth was treated with O₂ plasma so that the contact angle of the surface of the gas diffusion layer had 100 degrees (i.e., had hydrophilicity), and the treated gas diffusion layer was used as the anode gas diffusion layer 6. And, the gas diffusion layer without O₂ plasma treatment (i.e., having hydrophobicity) was used as the cathode gas diffusion layer 3.

On the other hand, in the cell 100 of comparative example 1, the gas diffusion layer without O₂ plasma treatment was used as the anode gas diffusion layer 6 and the cathode gas diffusion layer 3.

Using the cells 100 in experiment example 3 and comparative example 1, the PEFC was fabricated as in the experiment example 1. In this case, humidity sensors are attached at an oxidizing gas outlet and a fuel gas outlet in the PEFC, respectively.

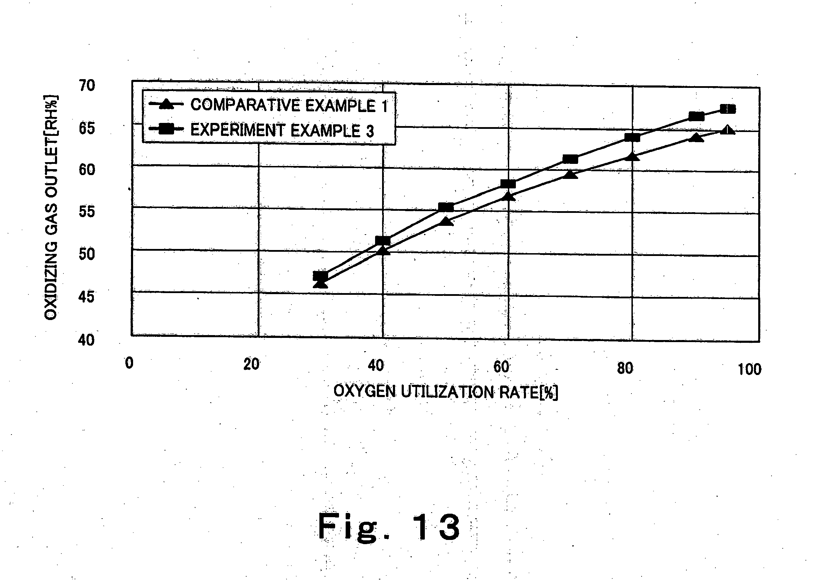

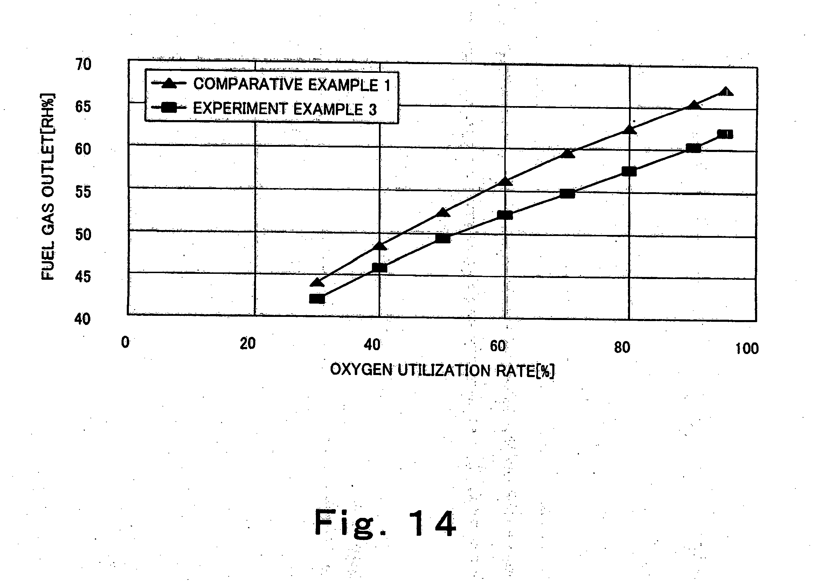

The PEFCs of experiment example 3 and of comparative example 1 fabricated as described above were caused to perform power generation under the full-level humidification power generation condition. Thereafter, the temperature of the cell 100 was controlled to reach 90 degrees centigrade, a hydrogen gas as the fuel gas was supplied to the fuel gas channel 13, and air as the oxidizing gas was supplied to the oxidizing gas channel 12. In this case, with a hydrogen gas utilization rate being set to 75% and an air utilization rate being set to 55%, the hydrogen gas and the air were supplied to the PEFC, after they were humidified so that their dew points reached about 65 degrees centigrade. After the voltage became stable, the humidity at the oxidizing gas outlet and the humidity at the fuel gas outlet were measured while changing the air utilization rate at 30% ~ 95%. Figs. 13 and 14 show the results.

Fig. 13 shows a humidity at the oxidizing gas outlet in a state where the air utilization rate in PEFC in experiment example 3 is changed and a humidity at the oxidizing gas outlet in a state where air utilization rate in PEFC in comparative example 1 is changed. Fig. 14 shows a humidity at the fuel gas outlet in a state where the air utilization rate in PEFC in experiment example 3 is changed and the humidity at a fuel gas outlet in a state where air utilization rate in PEFC in comparative example 1 is changed.

As can be seen from Figs. 13 and 14, the humidity at the fuel gas outlet was lower and the humidity at the oxidizing gas outlet was higher in the air utilization rate in the range from 30% ~ 95%, in experiment example 3 than in comparative example 1. It may be presumed that in the PEFC of experiment example 3, the anode gas diffusion layer 6 had hydrophilicity because of the plasma treatment, and thereby the water to be discharged from the anode 7 side was discharged from the cathode 4 side. Since the anode gas diffusion layer 6 is hydrophilic, a large amount of moisture in the fuel gas is adsorbed onto the anode gas diffusion layer 6, increasing a steam partial pressure in the anode gas diffusion layer 6. On the other hand, since the cathode gas diffusion layer 3 is hydrophobic (water-repellent), water discharge frequently occurs and a steam partial pressure decreases. Thereby, since the humidity grade formed between the anode 7 and the cathode 4 is higher at the anode 7 side, the force for promoting the diffusion of the water from the anode 7 to the cathode 4 is generated, making it possible to suppress the reverse diffusion from the cathode 7 to the anode 4.

As should be appreciated, by causing the gas diffusion layer from which the water is discharged to be hydrophilic and the gas diffusion layer toward which the water flows to be hydrophobic in order to diffuse the water to the anode 7 side or to the cathode 4 side, the water diffusion can be promoted.

In the region which is opposite to the upstream region to the intermediate region of the oxidizing gas channel 12, the level of hydrophilicity is higher in the anode gas diffusion layer 6 than in the cathode gas diffusion layer 3, while in the region which is opposite to the downstream region of the oxidizing gas channel 12,the level of hydrophilicity is lower in the anode gas diffusion layer 6 than in the cathode gas diffusion layer 3. Thus, it is possible to suppress the reverse diffusion from the cathode 4 toward the anode 7 from the upstream region to the intermediate region of the oxidizing gas channel 12 where the oxidizing gas contains poisoning substances with a high concentration, and to promote the reverse diffusion from the cathode 4 toward the anode 7 in the downstream region of the oxidizing gas channel 12 where the oxidizing gas contains poisoning substances with a low concentration. Since the water which has moved toward the anode 7 side which is opposite to the downstream region of the oxidizing gas channel 12 flows from the upstream region to the downstream region of the fuel gas channel 13, the anode catalyst layer 5 can be humidified with clean water.

### [Experiment example 4, Comparative examples 2 and 3]

Initially, the cells 100 used in experiment example 4 and in comparative examples 2 and 3 will be described.

The cells 100 used in experiment example 4 and in comparative examples 2 and 3 have a configuration which is basically identical to that of the cell 100 of experiment example 1, but are different from the same in a structure of the gas diffusion layer.

The cell 100 used in experiment example 4 is configured such that the cathode gas diffusion layer 3 and the anode gas diffusion layer 6 are each divided into a region which has a high level of hydrophilicity (hydrophilic section) and a region which has a high level of hydrophobicity (hydrophobic section). In addition, the oxidizing gas channel 12 formed on the inner surface of the cathode separator 10 and the fuel gas channel 13 formed on the inner surface of the anode separator 11 are configured to form a counter flow pattern.

To be specific, in the cell 100 in experiment example 4, 1/3 region of a gas diffusion layer (manufactured by JAPAN GORE-TEX INC product name "CARBEL-CL") including a water-repellent carbon cloth and a water-repellent carbon layer containing fluorine resin and carbon which is provided on one surface of the carbon cloth, from one end portion thereof toward the other end portion, was treated with O₂ plasma so that the contact angle of the surface of the gas diffusion layer had 100 degrees (had hydrophilicity), and the treated gas diffusion layer was used as the cathode gas diffusion layer 3. And, 2/3 region of the above gas diffusion layer (manufactured by JAPAN GORE-TEX INC product name "CARBEL-CL"), from the one end portion toward the other end portion, was treated with O₂ plasma so that the contact angle of the surface of the gas diffusion layer had 100 degrees (i.e., had hydrophilicity), and the treated gas diffusion layer was used as the anode gas diffusion layer 6.

In contrast, in the cell 100 of comparative example 2, the gas diffusion layer without O₂ plasma treatment was used as the anode gas diffusion layer 6 and the cathode gas diffusion layer 3, and the oxidizing gas channel-12 formed on the inner surface of the cathode separator 10 and the fuel gas channel 13 formed on the inner surface of the anode separator 11 were configured to form a counter flow pattern. In the cell 100 of comparative example 3, the gas diffusion layer without O₂-plasma treatment was used as the anode gas diffusion layer 6 and the cathode gas diffusion layer 3, and the oxidizing gas channel 12 formed on the inner surface of the cathode separator 10 and the fuel gas channel 13 formed on the inner surface of the anode separator 11 were configured to form a parallel flow pattern.

Then, using the cells 100 in experiment example 4 and comparative examples 2 and 3, the PEFC was fabricated as in experiment example 1.

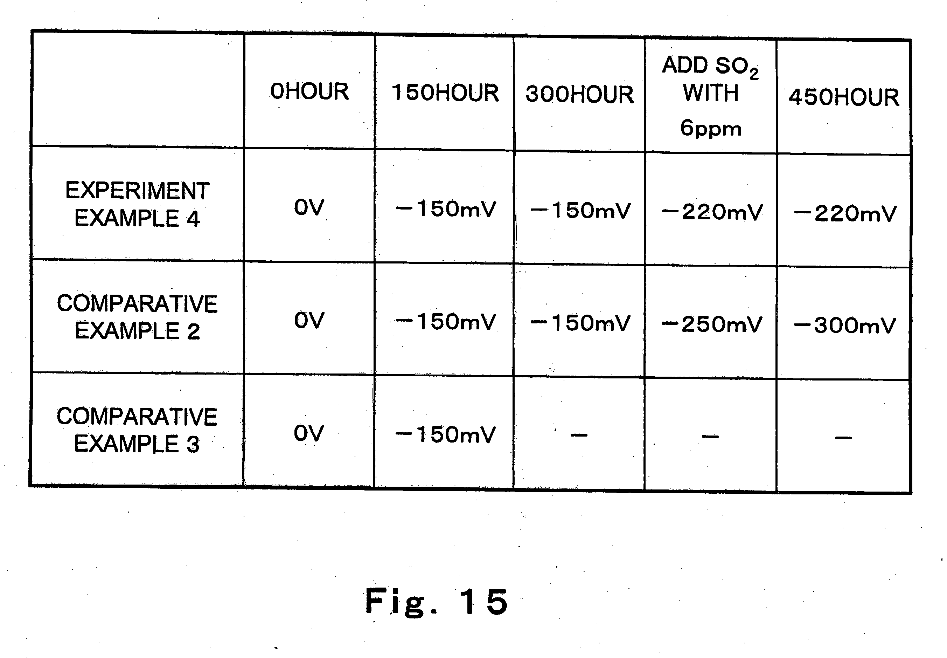

The PEFCs of experiment example 4 and comparative examples 2 and 3 fabricated as described above were caused to generate electric power under the full-level humidification condition. Thereafter, the temperature of the cell 100 was controlled to reach 65 degrees centigrade, a hydrogen gas as the fuel gas was supplied to the fuel gas channel 13, and air as the oxidizing gas was supplied to the oxidizing gas channel 12. In this case, with a hydrogen gas utilization rate being set to 75% and an air utilization rate being set to 55%, the hydrogen gas and the air were supplied to the PEFC, after they were humidified so that their dew points reached about 65 degrees centigrade. After the PEFCs in experiment example 4 and comparative examples 2 and 3 were operated for 100 hours and the voltage was stable, the cell temperature was controlled so as to reach 90 degrees centigrade, and SO₂ was added to the oxidizing gas channel 12 such that its concentration became 3ppm (adding test). The voltages of the PEFCs in experiment example 4 and comparative examples 2 and 3 were detected. The result was shown in Fig. 15. During the adding test, SO₂ continued to be added to the oxidizing channel 12

Fig. 15 is a table showing result of the adding test conducted for the PEFCs in experiment example 4 and comparative examples 2 and 3. In Fig. 15, each time indicates the time that has lapsed after adding SO₂, and the voltages are illustrated on the basis of the voltages in the case where SO₂ was added to the PEFC of experiment example 4.

In the PEFCs of experiment example 4 and comparative examples 2 and 3, the voltages drastically decreased just after adding SO₂. As shown in Fig. 15, at a time point when 150 hours lapsed, the voltage decreased by 150mV as compared to the time point just after adding SO₂. In the PEFC in comparative example 3, the voltage decreased after a lapse of 150 hours, and no voltage was detected after a lapse of about 220 hours after adding SO₂. In contrast, in the PEFCs of experiment example 4 and comparative example 2, no voltage drop was observed and the voltage was stable until 300 hours after a lapse of 150 hours.

Accordingly, SO₂ was added to the oxidizing gas channel 12 of the PEFCs of experiment example 4 and comparative example 2 such that its concentration became 6ppm. As a result, in the PEFC of experiment example 4, the voltage further decreased by 70mV (the voltage decreased by 220mV after adding SO₂ with 3ppm) immediately after adding SO₂ such that its concentration became 6ppm. But, no voltage drop was observed until 450 hours has lapsed after that, and the voltage was stable. In contrast, in the PEFC of comparative example 2, immediately after adding SO₂ such that its concentration became 6ppm, the voltage further decreased by 100mV (the voltage decreased by 250mV after adding SO₂ with 3ppm). The voltage continued to decrease with a lapse of time. After a lapse of 450 hours, the voltage further decreased by 50mV (the voltage decreased by 300mV after adding SO₂ with 3ppm). It is presumed that the voltage drop in the PEFC of comparative example 2 was due to the fact that SO₂ which is the poisoning substance moved from the cathode 4 toward the anode 7 and continued to poison the anode 7 because of an increase in the concentration of SO₂.

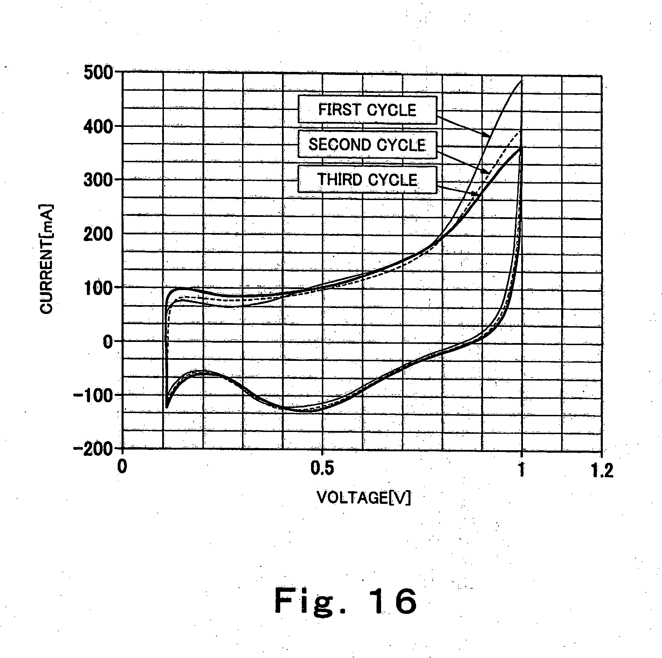

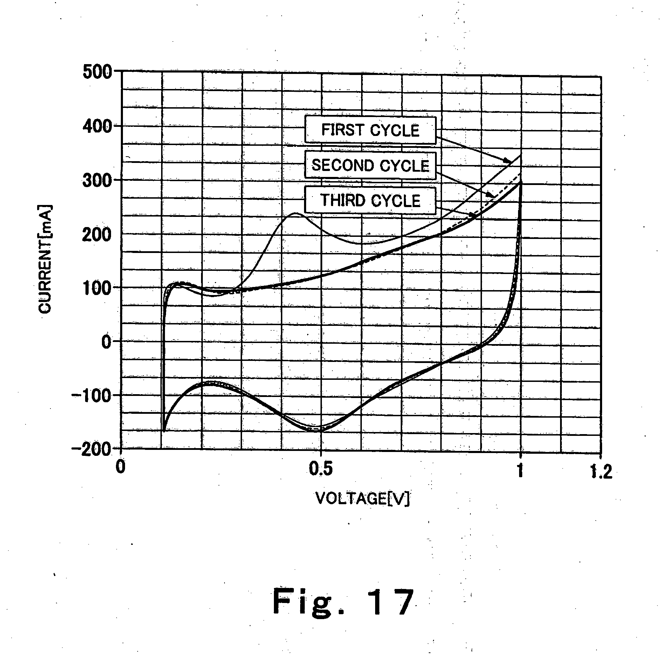

Accordingly, using the PEFCs of comparative example 2 and experiment example 4 after a lapse of 450 hours after adding SO₂, the voltage characteristic was measured by the anode CV measurement method, as in experiment example 1. The results were shown in Figs. 16 and 17.

Fig.16 is a graph showing plots of current values obtained from oxidation and reduction reactions in the anode 7 before and after an adding test in comparative example 2. Fig. 17 is a graph showing plots of current values obtained from oxidation and reduction reactions in the anode 7 before and after an adding test in experiment example 4.

As shown in Figs. 16, in the PEFC of comparative example 2, it was confirmed that the peak (+ 0.8V - + 1.0V) of the current value of the anode 7 measured in a first cycle decreased by sweeping the electric potential of the anode 7 (second cycle or fifth cycle), i.e., by applying the voltage between the anode 7 and the cathode 7, and SO₂ adsorbed onto the anode 7 was removed by oxidation.

On the other hand, as shown in Fig. 17, in the PEFC of experiment example 4, it was confirmed that the peak (+ 0.8V ∼ +1.0V) of the current value of the anode 7 measured in a first cycle was smaller than that of comparative example 2, a change in the peak of the current value was small even though the electric potential of the anode 7 was swept, and thus SO₂ adsorbed onto the anode 7 was less in amount.

From the tests of the experiment example 4 and the comparative examples 2 and 3, it was confirmed that the poisoning of the anode by the poisoning substance containing sulfur as major component added to the oxidizing gas can be sufficiently suppressed under the low-level humidification condition, by causing the level of hydrophilicity of the region of the cathode gas diffusion layer hydrophobic section 3a of the cathode gas diffusion layer 3 which is opposite to the upstream region of the oxidizing gas channel 12 to be lower than the level of hydrophilicity of the anode gas diffusion layer hydrophilic section 6b which is opposite to the cathode gas diffusion layer hydrophobic section 3a, in the PEFC of the present invention.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially according to the appended claims.

### INDUSTRIAL APPLICABILITY

A polymer electrolyte fuel cell of the present invention is capable of sufficiently suppressing poisoning of an anode by poisoning substances containing sulfur as major component added to an oxidizing gas under a low-level humidification condition, and is therefore useful.

## Claims

1. A polymer electrolyte fuel cell for supplying low-level humidified reactant gases to an upstream region of a fuel gas channel (13) and to an upstream region of an oxidizing gas channel (12), respectively, the fuel cell comprising:
an electrolyte layer-electrode assembly including an anode (7) having an anode catalyst layer (5) and an anode gas diffusion layer (6) formed on the anode catalyst layer (5); a cathode (4) having a cathode catalyst layer (2) and a cathode gas diffusion layer (3) formed on the cathode catalyst layer (2); and an electrolyte layer (1) sandwiched between the anode (7) and the cathode (4);
an anode separator (11) which has a plate shape and is provided with the fuel gas channel (13) on one of main surfaces thereof; and
a cathode separator (10) which has a plate shape and is provided with the oxidizing gas channel (12) on one of main surfaces thereof;
wherein the electrolyte layer-electrode assembly is sandwiched between the main surface of the anode separator (11) on which the fuel gas channel (13) is provided and the main surface of the cathode separator (10) on which the oxidizing gas channel (12) is provided;
a level of hydrophilicity of a cathode gas diffusion layer upstream section (3a) of the cathode gas diffusion layer (3) which is opposite to the upstream region of the oxidizing gas channel (12) including a mostupstream region thereof is set lower than a level of hydrophilicity of an anode gas diffusion layer opposite section (6b) of the anode gas diffusion layer (6) which is opposite to the cathode gas diffusion layer upstream section by making the level of hydrophilicity of an entire region of the anode gas diffusion layer opposite section higher than the level of hydrophilicity of the cathode gas diffusion layer upstream section, and wherein
a level of hydrophilicity of an entire region of a cathode gas diffusion layer downstream section (3b) of the cathode gas diffusion layer (3) is set higher than a level of hydrophilicity of an anode gas diffusion layer opposite section (6a) of the anode gas diffusion layer (6) which is opposite to the cathode gas diffusion layer downstream section.

2. The polymer electrolyte fuel cell according to claim 1, wherein the fuel gas channel (13) and the oxidizing gas channel (12) are configured to form a counter flow pattern.

3. The polymer electrolyte fuel cell according to claim 1, wherein the fuel gas channel (13) and the oxidizing gas channel (12) are configured to form a parallel flow pattern.

4. The polymer electrolyte fuel cell according to any of the claims 1 to 3, wherein the level of hydrophilicity of the entire region of the cathode gas diffusion layer downstream section (3b) is set higher than the level of hydrophilicity of the cathode gas diffusion layer upstream section (3a).

5. The polymer electrolyte fuel cell according to any of the claims 1 to 4, wherein the level of hydrophilicity of the entire region of the anode gas diffusion layer opposite section (6b) is set higher than the level of hydrophilicity of the anode gas diffusion layer opposite section (6a).

## Patentansprüche

1. Polymerelektrolyt-Brennstoffzelle zum Zuführen von Niedrigniveau-befeuchtetem Reaktantgas zu jeweils einem stromauf befindlichen Bereich eines Brenngaskanals (13) und einem stromauf befindlichen Bereich eines Oxidationsgaskanals (12) der Brennstoffzelle, wobei die Brennstoffzelle umfasst:
eine Elektrolytschicht-Elektroden-Anordnung einschließlich einer Anode (7) mit einer Anodenkatalysatorschicht (5) und einer auf der Anodenkatalysatorschicht (5) ausgebildeten Anodengasdiffusionsschicht (6); einer Kathode (4) mit einer Kathodenkatalysatorschicht (2) und einer auf der Kathodenkatalysatorschicht (2) ausgebildeten Kathodengasdiffusionsschicht (3); und einer Elektrolytschicht (1), die sandwichartig zwischen der Anode (7) und der Kathode (4) angeordnet ist;
einen Anodenseparator (11), der die Form einer Platte besitzt und auf einer seiner Hauptflächen mit dem Brenngaskanal (13) versehen ist; und
einen Kathodenseparator (10), der die Form einer Platte besitzt und auf einer seiner Hauptflächen mit dem Oxidationsgaskanal (12) versehen ist;
wobei die Elektrolytschicht-Elektroden-Anordnung sandwichartig angeordnet ist zwischen jener Hauptfläche des Anodenseparators (11), auf der der Brenngaskanal (13) vorgesehen ist, und jener Hauptfläche des Kathodenseparators (10), auf der der Oxidationsgaskanal (12) vorgesehen ist;
ein Niveau an Hydrophilie eines stromauf befindlichen Kathodengasdiffusionsschicht-Abschnitts (3a) der Kathodengasdiffusionsschicht (3), der dem stromauf befindlichen Bereich des Oxidationsgaskanals (12) einschließlich eines am weitesten stromauf befindlichen Bereichs desselben gegenüberliegt, niedriger als ein Niveau an Hydrophilie eines gegenüberliegenden Anodengasdiffusionsschicht-Abschnitts (6b) der Anodengasdiffusionsschicht (6), der dem stromauf befindlichen Kathodengasdiffusionsschicht-Abschnitt gegenüberliegt, eingerichtet wird, indem das Niveau an Hydrophilie eines gesamten Bereichs des gegenüberliegenden Anodengasdiffusionsschicht-Abschnitts höher als das Niveau an Hydrophilie des stromauf befindlichen Kathodengasdiffusionsschicht-Abschnitts gemacht wird, und wobei
ein Niveau an Hydrophilie eines gesamten Bereichs eines stromab befindlichen Kathodengasdiffusionsschicht-Abschnitts (3b) der Kathodengasdiffusionsschicht (3) höher eingerichtet wird als ein Niveau an Hydrophilie eines gegenüberliegenden Anodengasdiffusionsschicht-Abschnitts (6a) der Anodengasdiffusionsschicht (6), der dem stromab befindlichen Kathodengasdiffusionsschicht-Abschnitt gegenüberliegt.

2. Polymerelektrolyt-Brennstoffzelle nach Anspruch 1, wobei der Brenngaskanal (13) und der Oxidationsgaskanal (12) dazu ausgebildet sind, ein gegenläufiges Strömungsmuster zu bilden.

3. Polymerelektrolyt-Brennstoffzelle nach Anspruch 1, wobei der Brenngaskanal (13) und der Oxidationsgaskanal (12) dazu ausgebildet sind, ein paralleles Strömungsmuster zu bilden.

4. Polymerelektrolyt-Brennstoffzelle nach einem der Ansprüche 1 bis 3, wobei das Niveau an Hydrophilie des gesamten Bereichs des stromab befindlichen Kathodengasdiffusionsschicht-Abschnitts (3b) höher eingerichtet wird als das Niveau an Hydrophilie des stromauf befindlichen Kathodengasdiffusionsschicht-Abschnitts (3a).

5. Polymerelektrolyt-Brennstoffzelle nach einem der Ansprüche 1 bis 4, wobei das Niveau an Hydrophilie des gesamten Bereichs des gegenüberliegenden Anodengasdiffusionsschicht-Abschnitts (6b) höher eingerichtet wird als das Niveau an Hydrophilie des gegenüberliegenden Anodengasdiffusionsschicht-Abschnitts (6a).

## Revendications

1. Pile à combustible à électrolyte polymère destinée à fournir des gaz réactifs faiblement humidifiés à une région amont d'un canal de gaz combustible (13) et à une région amont d'un canal de gaz oxydant (12), respectivement, la pile à combustible comprenant :
un ensemble couche d'électrolyte-électrode comportant une anode (7) présentant une couche catalytique anodique (5) et une couche de diffusion de gaz anodique (6) formée sur la couche catalytique anodique (5) ; une cathode (4) présentant une couche catalytique cathodique (2) et une couche de diffusion de gaz cathodique (3) formée sur la couche catalytique cathodique (2) ; et une couche électrolytique (1) enserrée entre l'anode (7) et la cathode (4) ;
un séparateur anodique (11) qui présente une forme de plaque et est pourvu du canal de gaz combustible (13) sur l'une de ses surfaces principales ; et
un séparateur cathodique (10) qui présente une forme de plaque et est pourvu du canal de gaz oxydant (12) sur l'une de ses surfaces principales ;
dans laquelle l'ensemble couche d'électrolyte-électrode est enserrée entre la surface principale du séparateur anodique (11) sur laquelle est prévu le canal de gaz combustible (13) et la surface principale du séparateur cathodique (10) sur laquelle est prévu le canal de gaz oxydant (12) ;
le niveau d'hydrophilie d'une section amont de couche de diffusion de gaz cathodique (3a) de la couche de diffusion de gaz cathodique (3) qui est opposée à la région amont du canal de gaz oxydant (12), y compris une région le plus en amont de celui-ci, est établi pour être inférieur au niveau d'hydrophilie d'une section opposée de couche de diffusion de gaz anodique (6b) de la couche de diffusion de gaz anodique (6) qui est opposée à la section amont de couche de diffusion de gaz cathodique en rendant le niveau d'hydrophilie d'une région entière de la section opposée de couche de diffusion de gaz anodique supérieur au niveau d'hydrophilie de la section amont de couche de diffusion de gaz cathodique, et dans laquelle
le niveau d'hydrophilie d'une région entière d'une section aval de couche de diffusion de gaz cathodique (3b) de la couche de diffusion de gaz cathodique (3) est établi pour être supérieur au niveau d'hydrophilie d'une section opposée de couche de diffusion de gaz anodique (6a) de la couche de diffusion de gaz anodique (6) qui est opposée à la section aval de couche de diffusion de gaz cathodique.

2. Pile à combustible à électrolyte polymère selon la revendication 1, dans laquelle le canal de gaz combustible (13) et le canal de gaz oxydant (12) sont configurés pour former un flux à contre-courant.

3. Pile à combustible à électrolyte polymère selon la revendication 1, dans laquelle le canal de gaz combustible (13) et le canal de gaz oxydant (12) sont configurés pour former un flux parallèle.

4. Pile à combustible à électrolyte polymère selon l'une quelconque des revendications 1 à 3, dans laquelle le niveau d'hydrophilie de la région entière de la section aval de couche de diffusion de gaz cathodique (3b) est établi pour être supérieur au niveau d'hydrophilie de la section amont de couche de diffusion de gaz cathodique (3a).

5. Pile à combustible à électrolyte polymère selon l'une quelconque des revendications 1 à 4, dans laquelle le niveau d'hydrophilie de la région entière de la section opposée de couche de diffusion de gaz anodique (6b) est établi pour être supérieur au niveau d'hydrophilie de la section opposée de couche de diffusion de gaz anodique (6a).
